# EUROPÄISCHE PATENTSCHRIFT

(11) **EP 1 791 796 B1**
(45) Veröffentlichungstag und Bekanntmachung des Hinweises auf die Patenterteilung: **24.10.2012**
(21) Anmeldenummer: 05779370.5
(22) Anmeldetag: 24.08.2005
(51) Int. Cl.: C03C 27/06, C03C 27/10

(54) **VERFAHREN ZUM VERBINDEN VON BAUTEILEN AUS HOCHKIESELSÄUREHALTIGEM WERKSTOFF UNTER EINSATZ EINES FÜGEMITTELS, SOWIE NACH DEM VERFAHREN ERHALTENER BAUTEIL-VERBUND**
METHOD FOR JOINING PARTS MADE OF A MATERIAL WITH A HIGH CONTENT OF SILICIC ACID WHILE USING A JOINING AGENT, AND A BONDING OF PARTS THAT IS OBTAINED ACCORDING TO THE METHOD
PROCEDE D'ASSEMBLAGE D'ELEMENTS CONSTITUTIFS A BASE D'UN MATERIAU CONTENANT DE L'ACIDE SILICIQUE A HAUTE DENSITE, A L'AIDE D'UN AGENT D'ASSEMBLAGE ET ELEMENT COMPOSITE OBTENU SELON LEDIT PROCEDE

(30) Priorität: 28.08.2004 DE 102004041945; 11.11.2004 DE 102004054392; 02.06.2005 DE 102005025796
(43) Veröffentlichungstag der Anmeldung: 06.06.2007
(73) Patentinhaber: Heraeus Quarzglas GmbH & Co. KG, 63450 Hanau (DE)
(72) Erfinder: MAUL, Armin, 36355 Grebenhain/Nösberts (DE); HERBERT, Thorsten, 63776 Mömbris (DE); WEBER, Jürgen, 63801 Kleinostheim (DE); WERDECKER, Waltraud, 63456 Hanau (DE); GERHARDT, Rolf, 63546 Hammersbach (DE)
(74) Vertreter: Staudt, Armin Walter
(86) Internationale Anmeldenummer: PCT/EP2005/009127
(87) Internationale Veröffentlichungsnummer: WO 2006/024440

(56) Entgegenhaltungen:
- EP-A- 0 473 104
- EP-A- 1 516 864
- DE-B3- 10 243 954
- DE-B3- 10 262 015
- GB-A- 2 263 178
- US-A- 5 653 777
- US-A- 6 143 108
- PATENT ABSTRACTS OF JAPAN Bd. 012, Nr. 405 (C-539), 26. Oktober 1988 (1988-10-26) -& JP 63 144151 A (HOKKAIDO UNIV), 16. Juni 1988 (1988-06-16)
- PATENT ABSTRACTS OF JAPAN Bd. 012, Nr. 299 (C-520), 15. August 1988 (1988-08-15) -& JP 63 069734 A (FUJITSU LTD), 29. März 1988 (1988-03-29) in der Anmeldung erwähnt

## Beschreibung

Die Erfindung betrifft ein Verfahren zum Verbinden von Bauteilen aus Quarzglas durch stoffschlüssiges Fügen mittels einer SiO₂-haltigen Verbindungsmasse, die zwischen Verbindungsflächen der Bauteile ausgebildet wird, und die eine chemische Zusammensetzung aufweist, die arteigen in Bezug auf Quarzglas ist.

Weiterhin betrifft die Erfindung einen nach dem Verfahren erhaltenen Bauteil-Verbund, umfassend mindestens zwei Bauteile aus Quarzglas, die mittels einer SiO₂-haltigen Verbindungsmasse miteinander verbunden sind, wobei die SiO₂-haltige Verbindungsmasse amorph ist und eine chemische Zusammensetzung aufweist, die arteigen in Bezug auf Quarzglas ist.

Außerdem betrifft die Erfindung eine Verwendung eines SiO₂-haltigen Fügemittels zum Verbinden von Bauteilen aus Quarzglas durch stoffschlüssiges Fügen.

Quarzglas zeichnet sich durch einen niedrigen thermischen Ausdehnungskoeffizienten, durch optische Transparenz über einen weiten Wellenlängenbereich sowie durch hohe chemische und thermische Beständigkeit aus.

Bauteile aus Quarzglas werden für eine Vielzahl von Anwendungen eingesetzt, wie beispielsweise in der Lampenfertigung als Hüllrohre, Kolben, Abdeckplatten oder Reflektorträger für Lampen und Strahler im ultravioletten, infraroten und sichtbaren Spektralbereich, im chemischen Apparatebau oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfachen Quarzglas-Bauteilen, wie Rohre, Stäbe, Platten, Flansche, Ringe oder Blöcke. Zum Erzeugen besonderer Eigenschaften wird Quarzglas mit anderen Substanzen dotiert, wie etwa mit Titan, Aluminium, Bor, Germanium.

Häufig stellt sich die Aufgabe, Glaselemente miteinander zu verbinden, etwa für die Fertigung von Bauteilen mit komplexer Form aus einfacheren Formteilen. In der Regel erfolgt diese Verbindung durch Verschweißen der Bauteile miteinander. In der EP 1 042 241 A1 ist beispielsweise ein Verfahren zum stoßweisen Verschweißen von Quarzglasrohren beschrieben. Das Verschweißen beinhaltet ein Aufschmelzen der miteinander zu verbindenden Flächen und ein Anpressen der erweichten Flächen gegeneinander, so dass sich leicht eine unerwünschte plastische Verformung im Bereich der Schweißzone einstellt. Durch aufwändige Nachbearbeitung können derartige Verformungen zwar wieder beseitigt werden, wobei jedoch in der Regel Maßabweichungen bleiben.

Für die Herstellung von Präzisionsteilen, die aus mehreren Quarzglasteilen zusammengesetzt sind, wurden daher Fügetechniken vorgeschlagen, die Klebeverfahren unter Einsatz organischer Klebstoffmassen, die jedoch nur geringen Temperaturen standhalten, oder Diffusionsschweißverfahren unter Einsatz aktivierender Zwischenschichten beinhalten.

Ein Verfahren der zuletzt genannten Art ist beispielsweise in der DE 29 23 011 A1 beschrieben. Darin wird zum vakuumdichten Verbinden von Quarzglaselementen vorgeschlagen, auf den vorab plan polierten Verbindungsflächen eine Schicht aus Aluminium mit einer Dicke von 0,001 mm aufzudampfen, anschließend die Verbindungsflächen mit einem Pressdruck von 7 Nmm⁻² gegeneinander zu drücken, und diesen Verbund unter Vakuum auf eine Temperatur um 630 °C zu erhitzen.

Diese Fügetechnik verlangt eine sehr aufwändige Oberflächenbearbeitung; der Verbund kann Temperaturen deutlich oberhalb der Schmelztemperatur von Aluminium nicht standhalten.

Auch Schmelzverbindungen unter Einsatz an den jeweiligen thermischen Ausdehnungskoeffizienten angepasster Einschmelzwerkstoffe sind allgemein bekannt. So nennt beispielsweise die Produktinformationsschrift Nr. 9016 der Firma Schott Glaswerke "Technische Gläser" (Druckvermerk:9016 d XII/81) eine Anzahl von Glasloten für unterschiedliche Verbindungswerkstoffe mit mittleren Ausdehnungskoeffizienten im Bereich zwischen 4 x 10⁻⁶ /°C und 11 x 10⁻⁶ /°C (der Ausdehnungskoeffizient von Quarzglas liegt bei etwa 0,5 10⁻⁶ /°C).

Ein Fügeverfahren unter Einsatz derartiger Einschmelzwerkstoffe ist aus der DD 289 513 A5 bekannt. Zum formstabilen und vakuumdichten Verbinden von Präzisionsteilen aus Quarzglas wird der Einsatz eines Glaslotes auf Blei-Zinkborat-Basis vorgeschlagen. Das Glaslot besteht aus Blei-, Zink-, Bor- und Silizium-Oxid mit folgenden Gewichtsanteilen: 76% PbO, 11 % ZnO, 9% B₂O₃ und 2% SiO₂. Aus einem Pulver des Glaslotes mit Teilchengrößen zwischen 1 µm und 70 µm wird eine acetonlösliche Paste hergestellt, und diese auf einer der Verbindungsflächen aufgetragen. Die zu verbindenden Teile (Rohr und Platte) werden zueinander fixiert und die Verbindungsflächen gegeneinander gepresst. Dieser Verbund wird in einen Lötofen eingebracht und durchläuft eine Temperaturbehandlung mit einer Maximaltemperatur von 450 °C und einer Dauer von 3,5 Stunden. Das Glaslot schmilzt dabei auf und wandelt sich gleichzeitig in eine kristalline Phase mit höherer Schmelztemperatur um.

Die so hergestellte stoffschlüssige Fügeverbindung zeichnet sich - bis zu einer Temperatur von 500 °C - durch eine geringe Vakuumleckrate aus. Den besonders hohen Anforderungen an die Temperaturfestigkeit und an die Temperaturwechselbeständigkeit, wie sie sich bei vielen wärmetechnischen Anwendungen von Quarzglas stellen, kann diese Fügeverbindung jedoch nicht genügen. Darüber hinaus erfüllt die bekannte Fügeverbindung auch Anforderungen an die Reinheit und Kontaminationsfreiheit, wie sie beispielsweise bei Anwendungen in der Halbleiterfertigung, der Optik, aber auch im Bereich der Chemie, Medizin, Forschung und Analysetechnik bestehen, nicht.

Diesen Nachteil vermeidet das Fügeverfahren gemäß der eingangs genannten Gattung, wie es in der JP 63-069734 A beschrieben ist. Dort wird als Verbindungsmittel zum Verbinden einer optischen Faser mit einem Quarzglassubstrat ein polymerisierbares Sol aus Metall-Alkoxiden mit ähnlicher Zusammensetzung wie Faser und Substrat vorgeschlagen. Nach der Polamerisiationsreaktion wird das erhaltene Gel zur weiteren Verfestigung des Verbundes mittels Laser oder Heizer erhitzt und verglast, so dass zwischen Verbindungsflächen der Bauteile eine SiO₂-haltige Verbindungsmasse entsteht, deren chemische Zusammensetzung arteigen in Bezug auf Quarzglas ist.

Ein ähnliches Verfahren ist in der Druckschrift DE 23 42 852 B2 beschrieben. Darin wird zum Verbinden optischer Präzisionsteile aus Silikatgläsem eine SiO₂-Bindeschicht vorgeschlagen, die durch Hydrolyse von zerstäubten SiCl₄-Dämpfen mittels Wasserdampf erzeugt wird. Die Dicke der SiO₂-Bindeschicht liegt im Bereich zwischen 100 bis 200 nm, ihre Verfestigung erfolgt durch Erhitzen in einem Ofen bei einer Temperatur zwischen 150 °C und 250 °C.

Die beiden zuletzt genannten Methoden erfordern teuere Ausgangssubstanzen und eine Anzahl diffiziler und aufwändige Verfahrensschritte zu ihrer Durchführung, so dass sich diese Methoden aus Kosten- und Produktivitätsgründen in der Praxis nicht durchgesetzt haben.

Aus der JP 63-144151 A ist eine Fügeverbindung aus einem Quarzglas-Bauteil und einem weiteren Bauteil aus anorganischem Werkstoff bekannt. Die Fügemasse wird aus einem "schlickerähnlichen Gemisch" (slurry like blend) bestehend aus einer Glasfritte und einem organischen Binder hergestellt. Für deren thermischen Ausdehnungskoeffizienten wird ein Bereich von 19 x 10⁻⁷ bis 21,5 x 10⁻⁷ cm/cm°C angegeben, wobei der SiO₂-Gehalt im Bereich von 85 % oder 90 % liegt, der Rest sind Oxide von Na, K, Bor und Al.

In der GB 2 263 178 A geht es um die Herstellung eines Splices für optische Fasern. Dabei werden diese auf einem Substrat unter Einsatz eines Silica-Gels fixiert. Auch die US 6,143,108 A betrifft die Fixierung optischer Komponenten, wie Platten oder Fasern, mittels eines siliciumhaltigen, polymerisierbaren Komponente.

In der US 5,653,777 A geht es um die Herstellung von Kapillar-Spulen für die Gaschromatografie. Dabei wird eine Quarzglas-Kapillare auf einem Spulenkern aus Quarzglas aufgewickelt und dabei fixiert. Ein Fixieren durch Verschmelzen ist wegen der hohen Wärmekapazität der Spule kaum möglich, ohne die Kapillare zu verformen. Zur Fixierung wird daher ein spezielles Sol-Gel vorgeschlagen. Dieses besteht gemäß dem Ausführungsbeispiel aus einer alkoholischen Lösung einer Mischung aus SiO₂-Pulver mit einer Partikelgröße von weniger als 0,5 µm und Oxiden von Germanium und Phosphor. Als weitere bevorzugte Lösungsmittel werden Ketone und Aldehyde genannt.

Der Erfindung liegt somit die Aufgabe zugrunde, ein Verfahren anzugeben, das eine kostengünstige Herstellung eines mechanisch und thermisch stabilen Verbundes von Bauteilen aus Quarzglas ermöglicht, und ein dafür geeignetes SiO₂-haltiges Fügemittel zur Verwendung bei dem Verfahren zur Verfügung zu stellen.

Weiterhin liegt der Erfindung die Aufgabe zugrunde, einen Bauteil-Verbund bereitzustellen, der sich aus mindestens zwei gefügten Bauteilen aus Quarzglas zusammensetzt, und der sich durch eine hohe Zuverlässigkeit, Temperaturfestigkeit und Temperaturwechselbeständigkeit auszeichnet, und der auch für kontaminationsempfindliche Anwendungen einsetzbar ist.

Hinsichtlich des Verfahrens wird diese Aufgabe ausgehend von dem eingangs genannten Verfahren erfindungsgemäß dadurch gelöst, dass das Ausbilden der SiO₂-haltigen Verbindungsmasse folgende Verfahrensschritte umfasst:
(a) Bereitstellen eines wässrigen Schlickers, der amorphe SiO₂-Teilchen mit einem SiO₂-Gehalt von mindestens 99,9 Gew.-% enthält, und die Teilchengrößen im Bereich bis 500 µm aufweisen, wobei amorphe SiO₂-Teilchen mit Teilchengrößen im Bereich zwischen 1 µm und 50 µm den größten Volumenanteil ausmachen, welches ein Nassvermahlen amorpher SiO₂-Ausgangskömung umfasst,
(b) Ausbilden einer Schlickermasse zwischen den zueinander fixierten Verbindungsflächen,
(c) Trocknen der Schlickermasse, und
(d) Verfestigen der Schlickermasse durch Erhitzen unter Bildung der SiO₂-haltigen Verbindungsmasse, deren SiO₂-Gehalt sich jeweils von denjenigen der zu verbindenden Quarzglas-Bauteile um maximal 3 Gew.-% unterscheidet.

Beim erfindungsgemäßen Verfahren beruht die Verbindung der Bauteile auf einer SiO₂-haltigen Verbindungsmasse zwischen den Verbindungsflächen, welche unter Einsatz eines wässrigen Schlickers erzeugt wird, der amorphe SiO₂-Teilchen enthält. Der gießfähige oder pastöse Schlicker wird in Form einer Schlickermasse zwischen die zueinander fixierten Verbindungsflächen gebracht und anschließend durch Trocknen und Erhitzen verfestigt.

Dabei tritt zwangsläufig eine Schwindung der Schlickermasse ein. Eine besondere technische Herausforderung des erfindungsgemäßen Verfahrens besteht somit darin, ein Reißen der Schlickermasse beim Trocknen und Verfestigen zu vermeiden. Dies wird dadurch erreicht, dass von einem Schlicker ausgegangen wird, der amorphe SiO₂-Teilchen enthält. Diese unterliegen Wechselwirkungen untereinander, welche bereits die Schlickermasse im pastösen und trockenen Zustand stabilisieren und die Sinteraktivität fördern, was ein Verfestigen der getrockneten Schlickermasse bei vergleichsweise niedriger Temperatur unter Ausbildung einer dichten, rissfreien SiO₂-haltigen Verbindungsmasse ermöglicht. Dazu tragen außerdem die polare Natur des wässrigen Schlicker-Mediums und die amorphe Struktur der SiO₂-Teilchen bei, die per se eine hohe Sinteraktivität aufweisen.

Der homogenisierte Schlicker wird als "Schlickermasse" auf einer Verbindungsfläche" oder auf beiden Verbindungsflächen aufgetragen, wobei die Verbindungsflächen anschließend zueinander oder aufeinander fixiert werden. Es ist auch möglich, zwischen den vorab zueinander fixierten Verbindungsflächen eine Schlickermasse auszubilden.

Das Trocknen der Schlickermasse erfolgt in einem separaten Verfahrensschritt vor dem Verfestigen der Schlickermasse zum Beispiel bei Raumtemperatur, durch Erwärmen oder durch Gefriertrocknen, oder das Trocknen gemäß Verfahrensschritt (c) und das Verfestigen gemäß Verfahrensschritt (d) bilden einen gemeinsamen Temperaturbehandlungsvorgang.

Zum Verfestigen und Verdichten der getrockneten Schlickermasse wird diese auf eine Temperatur erhitzt die zu einem Sintern oder Schmelzen der amorphen SiO₂-Teilchen und zur Ausbildung einer rissfreien SiO₂-haltigen Verbindungsmasse führt, die aus opakem, teils opakem und teils transparentem oder vollständig transparentem, hochkieselsäurehaltigem Glas besteht.

Dabei gilt es, eine Kristallisation in der SiO₂-haltigen Verbindungsmasse, welche zu einer Schwächung der Fügeverbindung führen würde, zu vermeiden oder zumindest zu minimieren. In diesem Zusammenhang ist es ebenfalls wichtig, dass die für die Bildung des Schlickers verwendeten SiO₂-Teilchen amorph sind. Sie bestehen aus synthetisch hergestelltem SiO₂ oder sie sind auf Basis von gereinigtem natürlich vorkommendem Rohstoff hergestellt.

Eine weitere technische Herausforderung besteht darin, eine stabile SiO₂-haltige Verbindungsmasse zu erzeugen, die auch bei Temperaturwechseln eine stabile und sichere Verbindung zwischen den Bauteilen gewährleistet. Hierbei liegt ein besonderes Augenmerk auf dem thermischen Ausdehnungskoeffizienten der SiO₂-haltigen Verbindungsmasse und dessen Temperaturabhängigkeit im Vergleich zu dem oder den thermischen Ausdehnungskoeffizienten der zu verbindenden Bauteile.

In dem Zusammenhang spielt die "Arteigenheit" der SiO₂-haltigen Verbindungsmasse in Bezug auf Quarzglas eine wichtige Rolle. Darunter wird hier verstanden, dass sich der SiO₂-Gehalt der Verbindungsmasse jeweils von denjenigen der zu verbindenden Quarzglas-Bauteile um maximal 10 Gew.-%, vorzugsweise um maximal 3 Gew.-%, unterscheidet.

Durch die Verwendung von "arteigenem Material" für die Ausbildung der Verbindungsmasse wird zum einen eine möglichst weitgehende Annäherung der thermischen Ausdehungskoeffizienten zwischen dem Quarzglas der Bauteile und der Verbindungsmasse ermöglicht, und damit einhergehend eine besonders gute Haftung der verfestigten SiO₂-haltigen Verbindungsmasse an den Verbindungsflächen und insbesondere eine hohe Temperaturwechselbeständigkeit dieses Verbundes erreicht. Und zum anderen werden Kontaminationen des Quarzglases der miteinander verbundenen Bauteile oder deren Einsatzumgebung durch Fremdstoffe aus dem arteigenen Material vermieden oder vermindert,

Rauigkeiten und Unebenheiten der Verbindungsflächen wirken sich beim erfindungsgemäßen Fügeverfahren nicht zwangsläufig nachteilig aus. Im Gegenteil, durch eine gewisse Oberflächenrauigkeit kann die Haftung der Schlickermasse und der SiO₂-haltigen Verbindungsmasse sogar verbessert werden. Die Schlickermasse kann zudem leicht in einer solchen Stärke zwischen die Verbindungsflächen eingebracht werden, die eine vorherige aufwändige Bearbeitung dieser Flächen vermeidet.

Die amorphen SiO₂-Teilchen weisen Teilchengrößen im Bereich bis 500 µm auf, wobei amorphe SiO₂-Teilchen mit Teilchengrößen im Bereich zwischen 1 µm und 50 µm den größten Volumenanteil ausmachen.

Amorphe SiO₂-Teilchen in diesem Größenbereich und mit dieser Größenverteilung zeigen ein vorteilhaftes Sinterverhalten und eine vergleichsweise geringe Schwindung beim Trocknen. Die gröberen Teilchen tragen zu einem hohen Feststoffgehalt des Schlickers bei, der zu einer geringeren relativen Schwindung der Schlickermasse führt. Die feineren Teilchen wirken infolge der oben erläuterten Wechselwirkungen, die bis zur Ausbildung molekularer SiO₂-Bindungen führen können, ähnlich einem Bindemittel und begünstigen das Sinter- und Verglasungsverhalten. Es hat sich gezeigt, dass bei einem derartigen Schlicker eine Schlickermasse mit hoher Grünkörperdichte erzeugt und ohne Rissbildung getrocknet und verfestigt werden kann.

Der SiO₂-Gehalt der amorphen SiO₂-Teilchen beträgt mindestens 99,9 Gew.-%.

Der Feststoffanteil des unter Einsatz derartiger Teilchen hergestellten Schlickers besteht zu mindestens 99,9 Gew.-% aus SiO₂. Bindemittel oder dergleichen Zusatzstoffe sind nicht vorgesehen. Insoweit handelt es sich für einen Bauteil-Verbund aus undotiertem Quarzglas um ein arteigenes Ausgangsmaterial. Eine Kontaminations- oder Kristallisationsgefahr geht von diesem Ausgangsmaterial nicht aus.

Zu den hohe Sinteraktivität bewirkenden Wechselwirkungen zwischen den SiO₂-Teilchen trägt bei, dass die amorphen SiO₂-Teilchen durch Nassvermahlen von amorpher SiO₂-Ausgangskörnung erzeugt werden

Hierbei wird die gewünschte Teilchengrößenverteilung durch den Homogenisierungsprozess des wässrigen Schlickers eingestellt, wobei die amorphen SiO₂-Teilchen ausgehend von vergleichsweise groben Körnern mit Durchmessern zum Beispiel im Bereich zwischen 200 µm und 5000 µm beim Homogenisieren in Abhängigkeit von deren Verfestigungsgrad verkleinert werden. Beim Nassmahlen entstehen innerhalb des Schlickers amorphe SiO₂-Teilchen jeder Größe, auch solche, die durch Wechselwirkungen untereinander bereits im Schlicker die oben beschriebenen und Bindungen ausbilden, wobei die polare Natur des Wassers eine wichtige Rolle spielt. Die Stabilität der Schlickermasse wird dadurch verbessert.

Bei einer ersten bevorzugten Verfahrensvariante weisen die amorphen SiO₂-Teilchen Teilchengrößen im Bereich bis 100 µm auf.

Vorteilhafterweise beträgt der Feststoffgehalt des Schlickers beim Erzeugen der Schlickermasse zwischen den Verbindungsflächen mindestens 65 Gew.-%, vorzugsweise mindestens 80 Gew.-%, besonders bevorzugt mindestens 83 Gew.-%.

Durch einen hohen Feststoffgehalt beim Aufbringen oder Einbringen der Schlickermasse wird die Schwindung beim Trocknen und beim Verfestigen verringert, so dass die Bildung von Spannungen in der SiO₂-hattigen Verbindungsmasse vermindert wird und darüber hinaus die Formstabilität und Maßhaltigkeit des Verbundes verbessert wird. Die Einstellung eines hohen Feststoffanteils im Schlicker wird wiederum durch die polare Natur des wässrigen Mediums begünstigt. Andererseits können sich je nach dem gewählten Verfahren zum Auftragen des Schlickers auch Aspekte ergeben, die für einen dünnflüssigeren Schlicker sprechen.

Zum Auftragen des Schlickers sind die an sich bekannten Verfahren geeignet, wie beispielsweise Sprühen, elektrostatisch unterstütztes Sprühen, Fluten, Schleudern, Aufstreichen, Spachteln. Insbesondere bei den für eine großflächige und gleichmäßige Belegung geeigneten Auftragsverfahren durch Tauchen oder Sprühen sind vergleichsweise geringe Schlickerviskositäten vorteilhaft.

Außer amorphen, dichten SiO₂-Teilchen kann der Schlicker auch anderes amorphes SiO₂-Ausgangsmaterial enthalten.

So hat es sich beispielsweise als günstig erwiesen, wenn mindestens ein Teil der amorphen SiO₂-Teilchen in Form poröser Granulatteilchen, die aus Agglomeraten nanoskaliger, amorpher, synthetisch erzeugter SiO₂-Primärteilchen mit einer mittleren Primärteilchengröße von weniger als 100 nm gebildet.sind, vorliegt.

Das poröse Granulat besteht aus Agglomeraten, die aus nanoskaligen, amorphen, synthetisch erzeugten SiO₂-Primärteilchen mit einer mittleren Primärteilchengröße von weniger als 100 nm gebildet werden. Derartige Primärteilchen werden durch Flammenhydrolyse oder Oxidation von Siliziumverbindungen erhalten. Beim Granulieren bilden sich durch Zusammenlagerungen der feinteiligen SiO₂-Primärteilchen die gröberen Granulatteilchen aus. Dadurch setzt bereits in der Schlickermasse eine das spätere Sintern und Verglasen begünstigende Verdichtung und Verfestigung ein, die auf einer gewissen Löslichkeit und Beweglichkeit einzelner Primärteilchen im Schlicker beruht, die zur sogenannten "Halsbildung" zwischen benachbarten amorphen SiO₂-Teilchen in der Schlickermasse beiträgt. Beim Trocknen der mit SiO₂ angereicherten Flüssigphase im Bereich der "Hälse" verfestigen sich diese und führen zu einer festen Verbindung zwischen den einzelnen amorphen SiO₂-Teilchen und zu einer Verdichtung und Verfestigung der Schlickermasse, die das nachfolgende Sintern erleichtern. Die Porosität der Granulate und die damit einhergehende hohe spezifische Oberfläche bewirkt eine hohe Sinteraktivität

Als besonders günstig hat es sich erwiesen, den Schlicker auf einen pH-Wert im Bereich zwischen 3 und 5,5 einzustellen.

Der pH-Wert im sauren Bereich verbessert die Vernetzungsreaktionen der amorphen SiO₂-Teilchen untereinander und erleichtert das thermische Verfestigen der Schlickermasse.

Beim Nassmahlen ergibt sich infolge einer allmählichen Anlösung der amorphen SiO₂-Teilchen des Schlickers - bis hin zur Löslichkeitsgrenze - automatisch eine Absenkung des pH-Wertes. Insbesondere zur Beschleunigung des Prozesses wird jedoch eine Verfahrensweise bevorzugt, bei welcher der pH-Wert des Schlickers durch Zusatz einer Säure oder einer Base eingestellt wird.

Es hat sich als günstig erwiesen, wenn zwischen dem Ausbilden der Schlickermasse zwischen den zueinander fixierten Verbindungsflächen und dem Trocknen der Schlickermasse eine Einwirkungszeit liegt.

Dadurch wird eine bessere Haftung der Schlickermasse auf den Verbindungsflächen und eine Verstärkung der Bindungen der amorphen SiO₂-Teilchen untereinander erreicht. Es wird angenommen, dass dies auf Vernetzungsreaktionen zurückzuführen ist, die während der Einwirkungszeit unter Mitwirkung der vorhandenen Feuchtigkeit zwischen amorphen SiO₂-Teilchen der noch feuchten Schlickermasse und dem SiO₂ der Bauteil-Verbindungsflächen ablaufen. Die Dauer der Einwirkzeit ist abhängig von der Menge der Schlickermasse und liegt in Zeitraum weniger Minuten bis mehrerer Stunden.

In einer bevorzugten Verfahrensvariante umfasst das Verfestigen der Schlickermasse ein Sintern unter Bildung einer mindestens teilweise opaken Verbindungsmasse.

Das Sintern erfordert - im Vergleich zu Verglasen bis zur vollständigen Transparenz - vergleichsweise niedrige Sintertemperaturen und/oder kurze Sinterzeiten. Dies begünstigt die Einhaltung der Maßhaltigkeit des herzustellenden Bauteil-Verbundes, verringert den Energiebedarf und vermeidet thermische Beeinträchtigungen der zu verbindenden Bauteile und eine Kristallisation im Bereich der Verbindungsmasse.

Es hat sich gezeigt, dass für die meisten Anwendungen bereits durch Sintern (und nicht nur durch ein vollständiges Verglasen) eine ausreichende mechanische Festigkeit der SiO₂-haltigen Verbindungsmasse erzeugt werden kann.

Der Verdichtungsgrad hängt von der Sintertemperatur und der Sinterdauer ab. Je höher die Temperatur ist, um so kürzer kann die Sinterdauer sein, und umgekehrt. Eine übliche und bevorzugte Temperaturbehandlung zum Sintern der Schlickermasse umfasst ein Erhitzen bei einer Temperatur im Bereich zwischen 800 °C und 1450 °C, bevorzugt bei einer Temperatur unterhalb von 1300 °C.

Im einfachsten Fall wird das Sintern in einem Sinterofen durchgeführt, in den die zu verbindenden Bauteile eingebracht werden. Das gleichmäßige Erwärmen des gesamten Bauteil-Verbundes in einem Sinterofen vermindert die Ausbildung von Spannungen und vermeidet Verformungen des Verbundes.

Bei einer bevorzugten Verfahrensvariante umfasst das Verfestigen der Schlickermasse ein Verglasen unter Bildung einer mindestens teilweise transparenten, verfestigten SiO₂-haltigen Verbindungsmasse.

Ein vollständiges Verglasen der SiO₂-haltigen Verbindungsmasse (im Gegensatz zum Sintern) wird bevorzugt, wenn besonders hohe Anforderungen an die Dichtheit, Festigkeit, Partikelfreiheit und chemische Beständigkeit des Verbundes gestellt werden, wenn eine optische Transparenz in dem Bereich technisch erforderlich ist, oder aus rein ästhetischen Gründen. Die SiO₂-haltige Verbindungsmasse ist in dem Fall porenfrei oder porenarm und sie weist eine hohe Dichte auf, die etwa derjenigen der kieselsäurehaltigen Bauteile entspricht.

In der Regel genügt aber ein Verglasen oberflächennaher Bereiche der SiO₂-haltigen Verbindungsmasse. Sofern diese verglasten Bereiche die Verbindungsflächen miteinander verbinden, tragen sie zu einer höheren mechanischen Festigkeit und auch zur Dichtheit des Verbundes bei, auch wenn die SiO₂-haltige Verbindungsmasse ansonsten porenhaltig und opak ist.

Heliumlecktests zeigen, dass bei Bauteil-Verbunden in Form von Hohlkörpern, die mittels der zuletzt genannten Variante des erfindungsgemäßen Verfahrens hergestellt wurden, Vakuumdichtigkeiten bis 10⁻⁹ bar ohne Weiteres zu realisieren sind.

Das Verglasen erfolgt bevorzugt unter Einsatz einer Heizquelle, deren maximale Heizwirkung örtlich auf die Schlickermasse begrenzbar ist.

Die Wirkung der zum Verglasen erforderlichen hohen Temperatur kann hierbei lokal auf die zu verglasende Schlickermasse begrenzt, und plastische Verformungen können dadurch vermieden oder vermindert werden. Für diesen Zweck werden vorzugsweise Brenner oder Infrarot-Laser (zum Beispiel CO₂-Laser) eingesetzt.

Im Fall eines vorangegangenen Sinterschrittes wird vorteilhafterweise die Restwärme genutzt und der noch heiße Bauteil-Verbund verglast. Dies trägt zur Energieeinsparung bei, und die Ausbildung von Spannungen wird vermindert.

Bei einer weiteren bevorzugten Verfahrensvariante zur Lösung des oben genannten Problems hinsichtlich des thermischen Ausdehnungskoeffizienten der SiO₂-haltigen Verbindungsmasse wird ein Schlicker eingesetzt, der einen oder mehrere der folgenden Dotierstoffe enthält. Al₂O₃, TiO₂, Y₂O₃, AIN, Si₃N₄, ZrO₂, BN, HfO₂, Si, Yb₂O₃ und/oder SiC.

Durch Zugabe eines oder mehrerer der genannten Dotierstoffe ist der thermische Ausdehnungskoeffizient der SiO₂-haltigen Verbindungsmasse an denjenigen oder diejenigen der zu verbindenden Bauteile anpassbar. Vorzugsweise erfolgt die Dotierung mit dem Dotierstoff so, dass die Ausbildung einer kristallinen Phase in der SiO₂-haltigen Verbindungsmasse vermieden wird. Dies gelingt beispielsweise, indem der Dotierstoff zusammen mit dem SiO₂-Anteil der Verbindungsmasse zu einem Glas erschmolzen und anschließend das Glas vermahlen wird, so dass dotierte, amorphe SiO₂-Teilchen erhalten werden.

Au den vorstehend genannten Gründen wird für den Fall, dass mindestens eines der zu verbindenden hochkieselsäurehaltigen Bauteile einen derartigen Dotierstoff enthält, eine Verfahrensweise bevorzugt, bei der auch der wässrige Schlicker Partikel dieses Werkstoffes als Dotierstoff enthält.

Beim Verbinden von Bauteilen aus Quarzglas kann eine in Bezug auf diesen Werkstoff arteigene SiO₂-haltige Verbindungsmasse eingesetzt werden, bei der sich der SiO₂-Gehalt der Verbindungsmasse jeweils von denjenigen der Bauteile um maximal 10 Gew.-%, vorzugsweise um maximal 3 Gew.-%, unterscheidet.

Hinsichtlich des Bauteil-Verbundes wird die oben angegebene Aufgabe ausgehend von dem eingangs genannten Verbund erfindungsgemäß durch einen Bauteil-Verbund gelöst, der durch ein Verfahren gemäß der Erfindung erhalten wird, und wobei die SiO₂-haltige Verbindungsmasse einen SiO₂-Anteil von mindestens 99,9 Gew.-% aufweist, wobei sich der SiO₂-Gehalt der SiO₂-haltigen Verbindungsmasse jeweils von denjenigen der zu verbindenden Quarzglas-Bauteile um maximal 3 Gew.-% unterscheidet, mindestens teilweise opak ist und aus amorphen, gesinterten oder verglasten SiO₂-Teilchen mit Teilchengrößen im Bereich bis 500 µm hergestellt ist, wobei SiO₂-Teilchen mit Teilchengrößen im Bereich zwischen 1 µm und 50 µm den größten Volumenanteil der Verbindungsmasse ausmachen.

Die SiO₂-haltige Verbindungsmasse ist amorph, mindestens teilweise opak und sie weist eine chemische Zusammensetzung auf, die arteigen in Bezug auf den hochkieselsäurehaltigen Werkstoff der zu verbindenden Bauteile ist. Hinsichtlich der Definition des Begriffes "arteigen" wird auf die obigen Ausführungen zum erfindungsgemäßen Verfahren verwiesen.

Die Bildung dieser Verbindungsmasse erfolgt vorzugsweise anhand des oben beschriebenen erfindungsgemäßen Verfahrens unter Einsatz eines amorphe SiO₂-Teilchen enthaltenden Schlickers. Daher besteht die SiO₂-haltige Verbindungsmasse im Gegensatz zum Verbund der eingangs genannten Gattung aus gesinterten oder verglasten amorphen SiO₂-Teilchen mit Teilchengrößen im Bereich bis 500 µm, wobei amorphe SiO₂-Teilchen mit Teilchengrößen im Bereich zwischen 1 µm und 50 µm den größten Volumenanteil ausmachen.

Der Cristobalitanteil in der SiO₂-haltigen Verbindungsmasse beträgt höchstens 1 Gew.-%, da andernfalls die Kristallbildung zu einer Schwächung der Fügeverbindung führt. Eine derartige aus arteigenen Werkstoff-Teilchen bestehende Verbindungsmasse führt zu einer besonders guten Haftung und einer
hohen Temperaturwechselbeständigkeit des erfindungsgemäßen Bauteil-Verbundes, der auch für kontaminationsempfindliche Anwendungen geeignet ist, und der auch hohe Anforderungen an die Maßhaltigkeit erfüllt. Der erfindungsgemäße Bauteil-Verbund weist eine oder mehrere Fügestellen auf. Die Anwendungsmöglichkeiten sind vielfältig. Als Beispiele seien Waferträger genannt, die hohen Anforderungen an die Maßhaltigkeit, die thermische Beständigkeit und die Kontaminationsfreiheit genügen müssen, oder Strukturelemente aus Quarzglas, die aus einfachen Elementen zusammenfügt sind, etwa Gerüste für Teleskope, Spiegel oder dergleichen, die sich durch geringes Gewicht oder durch einen niedrigen thermischen Ausdehnungskoeffizienten auszeichnen. Vorteilhaft bestehen auch Behältnisse, wie Reaktorhüllen für die Durchführung chemischer und physikalischer Prozesse oder Tanks für die Aufnahme von Flüssigkeiten, Gasen und Feststoffen aus dem erfindungsgemäßen Bauteil-Verbund. Abgesehen von diesen sowie den eingangs genannten Einsatzmöglichkeiten in der Lampenfertigung, bei der Halbleiterherstellung oder bei Laborgerätschaften, bietet sich die Verwendung erfindungsgemäßer Verbund-Bauteile auch im Bereich der Faseroptik an, etwa für das Verbinden von Teilen von Vorformen für optische Fasern untereinander oder mit Haltern aus Quarzglas, für die Herstellung von Lichtwellenleiterbauteilen, wie Stecker, Koppler, Abzweiger, Verbinder.

Die SiO₂-haltige Verbindungsmasse weist einen SiO₂-Anteil von mindestens 99,9 Gew.-% auf.

Insoweit handelt es sich für einen Bauteil-Verbund aus undotiertem Quarzglas um eine Verbindungsmasse aus arteigenem Material, so dass merkliche Unterschiede im Ausdehnungskoeffizienten und dessen Temperaturabhängigkeit und Kontaminations- sowie Kristallisationsprobleme vermieden werden.

Die SiO₂-haltige Verbindungsmasse ist mindestens teilweise opak. In der Regel genügt es, wenn lediglich die oberflächennahen Bereiche der SiO₂-haltigen Verbindungsmasse vollständig verglast und transparent sind. Diese verbinden die Verbindungsflächen der Bauteile miteinander und tragen so zur mechanischen Festigkeit, zur Dichtheit und Partikelfreiheit des Verbundes bei.

Es hat sich als günstig erwiesen, wenn die spezifische Dichte der SiO₂-haltigen Verbindungsmasse mindestens 2,0 g/cm³, vorzugsweise mindestens 2,1 g/cm³ beträgt.

Die Fügestelle eines derartigen Bauteil-Verbunds zeichnet sich durch besonders hohe mechanische Festigkeit, chemische Beständigkeit, Gasdichtheit sowie durch Partikelfreiheit aus.

Zur Anpassung ihres thermischen Ausdehnungskoeffizienten an die Bauteile des Bauteil-Verbund hat es sich bewährt, wenn die SiO₂-haltige Verbindungsmasse Dotierstoffe in Form von Al₂O₃, TiO₂, Y₂O₃, AIN, Si₃N₄, ZrO₂, BN, HfO₂, Si, Yb₂O₃ und/oder SiC, vorzugsweise als Teilchen in amorpher Form enthält.

Der thermische Ausdehnungskoeffizient der SiO₂-haltigen Verbindungsmasse ist durch den Zusatz eines oder mehrerer der genannten Dotierstoffe an denjenigen oder diejenigen der zu verbindenden Bauteile angepasst.

Vorzugsweise erfolgt die Dotierung dabei so, dass die Ausbildung einer kristallinen Phase in der Verbindungsmasse vermieden wird. Dies gelingt beispielsweise, indem der Dotierstoff zusammen mit dem SiO₂-Anteil der Verbindungsmasse zu , einem Glas erschmolzen und anschließend das Glas zu dotierten, amorphen SiO₂-Teilchen vermahlen wird.

Für den Fall, dass mindestens eines der zu verbindenden Bauteile aus hochkieselsäurehaltigem Werkstoff besteht, der einen oder mehrere der Dotierstoffe Al₂O₃, TiO₂, Y₂O₃, AIN, Si₃N₄, ZrO₂, B₂O₃, HfO₂ oder Yb₂O₃ enthält, weist die SiO₂-haltige Verbindungsmasse vorzugsweise denselben Dotierstoff oder dieselben Dotierstoffe auf.

Durch Zusatz eines zur Dotierung des Bauteils korrespondierenden Dotierstoffes zu der Verbindungsmasse ist der thermische Ausdehnungskoeffizient an denjenigen oder diejenigen der zu verbindenden Bauteile besonders einfach anpassbar.

In einer besonders bevorzugten Ausgestaltung des erfindungsgemäßen Bauteil-Verbundes ist eine opake SiO₂-haltige Verbindungsmasse vorgesehen, die im Spalt zwischen zwei koaxial zueinander angeordneten Quarzglasrohren erzeugt ist.

Die opake SiO₂-haltige Verbindungsmasse dient hierbei einerseits zur Fixierung der Quarzglasrohre miteinander und sie verleiht dem Rohrverbund hinsichtlich seiner Transluzenz und der Abschirmung von Wärmestrahlung Eigenschaften eines opaken Zylinders, selbst wenn eines der Quarzglasrohre oder beide Quarzglasrohre transparent sind. Dies ist vor allem bei großvolumigen Quarzglasrohren von Vorteil, die nur durch Heißverformung von Rohren mit Standardgrößen erhalten werden können, und die dabei ihre Transluzenz ganz oder zum großen Teil verlieren.

Die vorliegende Erfindung manifestiert sich insbesondere in der Verwendung eines SiO₂-haltigen Fügemittels in Form einer pulverförmigen, pastösen oder flüssigen Masse, die amorphe SiO₂-Teilchen mit Teilchengrößen im Bereich bis 500 µm aufweist, wobei amorphe SiO₂-Teilchen mit Teilchengrößen im Bereich zwischen 1 µm und 50 µm den größten Volumenanteil ausmachen, als SiO₂-haltiges Fügemittel mit einem SiO₂-Anteil von mindestens 99,9 Gew.-% zum Verbinden von Bauteilen aus Quarzglas durch stoffschlüssiges Fügen gemäß dem erfindungsgemäßen Verfahren.

Das SiO₂-haltige Fügemittel liegt vor dem bestimmungsgemäßen Einsatz als pulverförmige, pastöse oder flüssige Masse vor. Aus der pulverförmigen, pastösen oder flüssigen Masse wird durch Trocknen und Verfestigen gemäß dem oben erläuterten Verfahren die amorphe SiO₂-Teilchen enthaltende Verbindungsmasse erzeugt, wobei die amorphen SiO₂-Teitchen durch Wechselwirkungen untereinander stabilisierend wirken und ein Verfestigen der Fügemasse bei vergleichsweise niedriger Temperatur unter Ausbildung einer dichten und rissfreien SiO₂-haltigen Verbindungsmasse ermöglichen.

Die amorphe Struktur der SiO₂-Teilchen bewirkt eine hohe Sinteraktivität, wozu beiträgt, wenn die amorphen SiO₂-Teilchen Teilchengrößen im Bereich bis 100 µm aufweisen.

Häufig stellt sich die Aufgabe, Bauteile aus unterschiedlichen Werkstoffen, etwa aus Glas oder aus Keramik miteinander zu verbinden. Die in der Regel deutlich unterschiedlichen Ausdehnungskoeffizienten führen zu einer geringen Temperaturwechselbeständigkeit. Es hat sich aber gezeigt, dass unter Einsatz des erfindungsgemäßen Fügemittels auch bei zu verbindenden Bauteilen aus unterschiedlichen Werkstoffen eine stabile Fügeverbindung erreichbar ist, sofern eine niedrige Einsatztemperatur für den Bauteil-Verbund unterhalb von 300 °C gewährleistet ist. Hilfreich ist, wenn ergänzend dazu der Ausdehnungskoeffizient der SiO₂-Verbindungsmasse durch Zudotierung angepasst ist.

Verbund-Bauteile aus Keramik und Quarzglas werden beispielsweise in der Lampenfertigung hergestellt. Eine bekannte Ausführungsform umfasst ein Lampenrohr aus Quarzglas, das beiderseits stirnseitig mit Endkappen aus Aluminiumoxid verschlossen ist. Derartige Endkappen wurden bisher mittels eines organischen Klebers an beiden Enden eines Lampenrohres befestigt, mit der Folge von Ablagerungen auf dem Lampenrohr durch beim Betrieb ausgasende Bestandteile des Klebers. Derartige Ablagerungen werden bei der Herstellung des Verbundes unter Einsatz des erfindungsgemäßen Fügemittels vermieden. Kontaminations- und Partikelfreiheit sowie eine ausreichende Dichtheit werden durch eine ausreichende Dichte der SiO₂-haltigen Verbindungsmasse erreicht, wobei ein Verdichten oberflächennaher Bereiche mittels eines Lasers bevorzugt ist, um thermische Belastungen der umgebenden Bereiche zu vermeiden, wie beispielsweise im Bereich der Aluminiumoxid-Endkappen angeordnete hitzeempfindliche, elektrische Bauteile.

Verbund-Bauteile sind allgemein bekannt. Hier wird eine Ausführungsform eines Bauteil-Verbundes aus Keramik und Quarzglas für den Einsatz in der Halbleiterfertigung in Form eines Waferhalters aus Quarzglas, vorgeschlagen, dessen Oberfläche ganz oder teilweise mit einem keramischen Schichtelement belegt ist.

In der Halbleiterfertigung werden chemisch besonders beanspruchte Geräte und Apparate aus keramischen Werkstoffen hergestellt, wie etwa Aluminiumoxid oder Siliciumcarbid, die sich durch hohe Ätzbeständigkeit gegenüber den meisten bei der Halbleiterfertigung eingesetzten Prozessmedien auszeichnen. Die aus derartigen keramischen Werkstoffen bestehenden Geräte und Apparate sind jedoch sehr teuer. Erfindungsgemäß wird deshalb ein relativ preiswertes Basisbauteil aus Quarzglas für einen Waferhalter gefertigt, und dessen Oberfläche mit einem keramischen Schichtelement unter Anwendung des erfindungsgemäßen Fügemittels und durch Erzeugen der oben beschriebenen SiO₂-haltigen Verbindungsmasse verbunden. Der vergleichsweise billigere Basiskörper aus Quarzglas, der mit einer dünnen, kompakten Keramikschicht versehen ist, zeigt die gleiche Ätzbeständigkeit wie ein Keramik-Vollkörper. Eine ausreichend stabile Fügeverbindung zwischen dem Basisbauteil und dem keramischen Schichtelement wird erhalten, sofern eine Betriebstemperatur von 300 °C nicht überschritten wird, eine Voraussetzung, die bei einem Einsatz des Halters für Single-Wafer-Anwendung erfüllbar ist.

Für diesen Zweck geeignete keramische Schichtelemente sind in Form von Keramikfolien im Handel erhältlich.

Nachfolgend wird die Erfindung anhand von Ausführungsbeispielen und einer Zeichnung näher erläutert. Im einzelnen zeigen in schematischer Darstellung:
- **Figur 1**: eine Ausführungsform des erfindungsgemäßen Bauteil-Verbundes in Form mit ihren Längsseiten miteinander verbundener Quarzglasrohre,
- **Figur 2a**: das Fügen zweier Quarzglas-Platten nach dem erfindungsgemäßen Verfahren,
- **Figur 2b**: den anhand des in Figur 2a dargestellten Verfahrensschritts erhaltenen Bauteil-Verbund n Form zweier mit ihren Flachseiten aufeinander liegender Quarzglas-Platten,
- **Figur 3**: eine weitere Ausführungsform des erfindungsgemäßen Bauteil-Verbundes in Form einer aus Einzelteilen zusammengefügten kuppelförmigen Reaktorhülle,
- **Figur 4**: einen Verfahrensschritt zum Fügen eines Waferträgers aus mehreren Einzelteilen mittels des erfindungsgemäßen Verfahrens,
- **Figur 5a**: eine Ausführungsform des erfindungsgemäßen Bauteil-Verbundes in Form stoßförmig miteinander verbundener Quarzglas-Platten,
- **Figur 5b**: eine weitere Ausführungsform stoßförmig miteinander verbundener Quarzglas-Platten,
- **Figur 6**: einen aus platten- und rohrförmigen Einzelelementen gefügten Bauteil-Verbund in Form eines Leichtgewicht-Spiegelträgers in einer Draufsicht,
- **Figur 7**: ein aus Einzelelementen gefügtes Laborgerät mit Kegelschliff in einer Seitenansicht,
- **Figur 8**: einen Ausschnitt eines erfindungsgemäßen Bauteil-Verbundes in Form koaxial zueinander angeordneter und auf einem Quarzglasring fixierter Quarzglasrohre in einer Seitenansicht,
- **Figur 9**: eine weitere Ausführungsform des erfindungsgemäßen Bauteil-Verbundes, bei dem ein Halter aus Quarzglas mit einer Vorform für optische Fasern verbunden ist,
- **Figur 10**: eine weitere Ausführungsform des erfindungsgemäßen Bauteil-Verbundes in Form eines opaken Rohres in einem radialen Querschnitt,
- **Figur 11**: eine Ausführungsform eines Bauteil-Verbundes in Form einer UV-Entladungslampe, und
- **Figur 12**: eine Ausführungsform eines Bauteil-Verbundes in Form eines Single-Wafer-Halters.

### 1. Schlickerherstellung

Es wird ein homogener, stabilisierter Grundschlicker hergestellt. Für einen Ansatz von 10 kg Grundschlicker werden in einer mit Quarzglas ausgekleideten Trommelmühle mit ca. 20 Liter Volumeninhalt, 1,8 kg deionisiertes Wasser mit einer Leitfähigkeit von weniger als 3 µS mit 8,2 kg einer amorphen Quarzglaskörnung, hergestellt aus natürlichem Rohstoff, mit Korngrößen im Bereich zwischen 250 µm und 650 µm und mit einem SiO₂-Gehalt von 99,99 % vermischt.

Diese Mischung wird mittels Mahlkugeln aus Quarzglas auf einem Rollenbock bei 23 U/min während einer Dauer von 3 Tagen soweit vermahlen, dass sich ein homogener, stabilisierter Grundschlicker mit einem Feststoffgehalt von 78 % ergibt. Im Verlauf des Vermahlens kommt es infolge des in Lösung gehenden SiO₂ zu einer Absenkung des pH-Werts auf etwa 4.

Die nach dem Nassvermahlen der Quarzglaskörnung erhaltenen amorphen SiO₂-Teilchen im Grundschlicker zeigen eine Teilchengrößenverteilung, die durch einen D₅₀-Wert von etwa 5 µm und durch einen D₉₀-Wert von etwa 23 µm gekennzeichnet ist.

Dem so erhaltenen homogenen Grundschlicker wird weitere amorphe SiO₂-Körnung mit einer mittleren Korngröße von etwa 5 µm zugemischt, bis ein Feststoffgehalt von 87 Gew.-% erreicht ist. Die Mischung wird 12 Stunden lang in einer Trommelmühle bei einer Drehzahl von 25 U/min homogenisiert. Der so erhaltene Schlieker hat einen Feststoffgehalt von 87% und eine Dichte von fast 2,0 g/cm³.

Der Grundschlicker wird in diesem Zustand zur Herstellung einer Klebeverbindung eingesetzt, wie dies im Folgenden näher erläutert wird.

### 2. Herstellen einer Klebeverbindung unter Einsatz des Schlickers

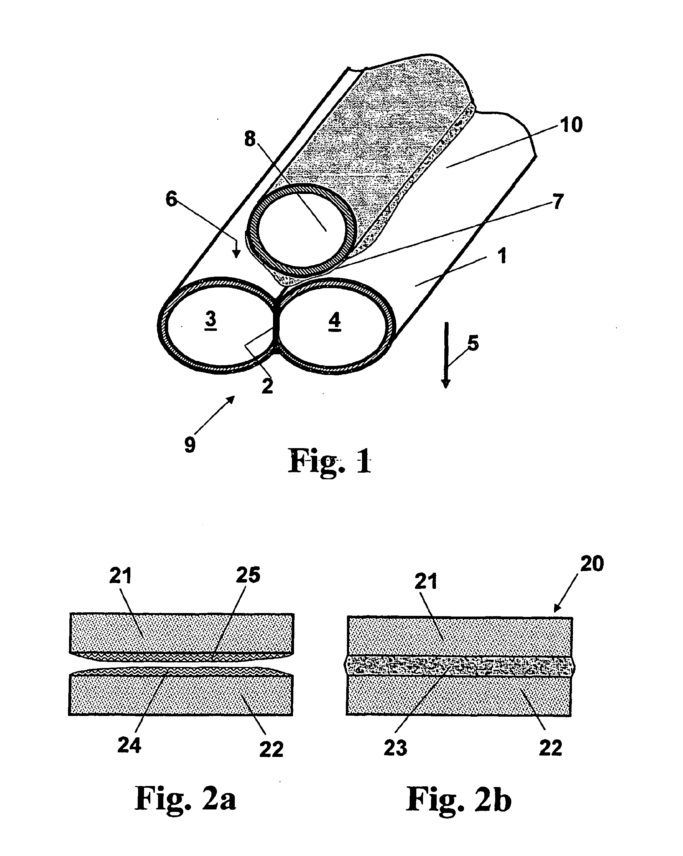

Figur 1 zeigt schematisch ein sogenanntes "Zwillingsrohr" aus Quarzglas. Dieses besteht aus einem im Querschnitt 8-förmigen Hüllrohr 1 aus Quarzglas, das durch einen Mittelsteg 2 in zwei Teilräume 3, 4 unterteilt ist. Die Teilräume 3, 4 dienen zur Aufnahme jeweils einer Heizwendel, wobei die elektrischen Anschlüsse über endseitige Quetschungen aus dem Hüllrohr 1 herausgeführt sind (in Figur 1 nicht dargestellt). Die Hauptabstrahlrichtung des Zwillingsrohres 9 zeigt im

Ausführungsbeispiel nach unten und ist durch den Richtungspfeil 5 symbolisiert. Auf der Hauptabstrahlrichtung 5 abgewandten Oberseite 6 des Zwillingsrohres 9 soll ein Kühlrohr 8 aus Quarzglas gefügt werden, dessen Längsachse parallel zur Längsachse des Zwillingsrohres 9 verläuft.

Hierzu werden die Oberflächen von Kühlrohr 8 und Zwillingsrohr 9 mittels Alkohol gereinigt und anschließend zur Beseitigung anderer Oberflächenverunreinigungen, insbesondere von Alkali- und Erdalkakali-Verbindungen, in 30 %-iger Flusssäure gereinigt.

Anschließend wird in die Senke zwischen den beiden Rohrhälften des Zwillingsrohres 9 die oben beschriebenen Schlickermasse eingebracht und darauf das Kühlrohr 8 gepresst, so dass es sich in die Senke eingelegt, wobei ein kleine Menge der Schlickermasse an der Kontaktfläche nach oben herausquillt, und dabei einen an der Kontaktfläche entlang laufenden Schlicker-Wulst 10 bildet. Die Dicke der Verbindungsmasse 7 zwischen den Kontaktflächen beträgt wenige Zehntel Millimeter.

Diese Anordnung ruht etwa 6 Stunden an Luft, wobei gleichzeitig die Schlickerschicht 7 langsam trocknet. Die vollständige Trocknung erfolgt unter -Einsatz eines IR-Strahlers an Luft. Nach dem Trocknen ist die Verbindungsmasse 7 rissfrei, und sie hat im Bereich der Kontaktflächen eine Dicke von etwa 0,4 mm, wobei sie im Bereich der Senke und des Schlicker-Wulstes 10 etwas dicker ist.

Die getrocknete Verbindungsmasse 7 wird anschließend in einem Sinterofen unter Luftatmosphäre verglast. Das Heizprofil beim Verglasen umfasst eine Heizrampe, während der die Verbindungsmasse 7 von Raumtemperatur innerhalb von zwei Stunden auf eine Heiztemperatur von 1300 °C erhitzt wird. Auf dieser Heiztemperatur wird die Verbindungsmasse 7 zwei Stunden lang gehalten. Die Verbindungsmasse 7 ist danach vollkommen gesintert, optisch opak und weist eine mittlere spezifische Dichte um 2,12 g/cm³ auf.

Der so hergestellte Verbund wird dem Sinterofen im heißen Zustand entnommen und der Bereich um den gesinterten Schlicker-Wulst 10 mittels eines Knallgasbrenners verglast. Hierzu wird der Knallgasbrenner entlang der freien Oberfläche des gesinterten Schlicker-Wulstes 10 bewegt und dieser solange erhitzt, bis er vollkommen transparent ist. Der restliche Bereich der gesinterten Verbindungsmasse 7 - zwischen dem Kühlrohr 8 und dem Zwillingsrohr 9 - bleibt opak, so dass sich die mittlere spezifische Dichte nicht wesentlich ändert.

Der noch heiße Verbund aus Zwillingsrohr 9 und Kühlrohr 8 wird anschließend in den noch auf 1100 °C beheizten Sinterofen eingebracht und darin langsam abgekühlt. Die erste Abkühlrampe liegt bei 5 °C/min und endet bei einer Ofentemperatur von 1050 °C, die zweite Abkühlrampe liegt bei 10 °C/min und endet bei einer Ofentemperatur von 950 °C. Danach erfolgt das weitere Abkühlen ungeregelt bei geschlossenem Ofen. Durch das verhältnismäßig langsame Abkühlen wird der Bauteil-Verbund getempert, so dass vorhandene mechanische Spannungen abgebaut und die Ausbildung von Spannungen durch das Abkühlen vermieden wird.

Der Verbund aus Zwillingsrohres 9 und Quarzglas-Kühlrohr 8 ist mechanisch stabil und zeichnet sich durch eine hohe Temperaturwechselbeständigkeit auch bei Einsatztemperaturen oberhalb von 1000 °C aus.

**Figur 2b** zeigt schematisch einen Verbundkörper 20, bestehend aus einer unteren Quarzglas-Platte 22 und einer oberen Quarzglas-Platte 21, die mittels einer 1 mm starken opaken SiO₂-haltigen Zwischenschicht 23 miteinander verbunden sind. Die Platten sind jeweils 2 mm dick und quadratisch mit einer Kantenlänge von 200 mm.

Die opake Zwischenschicht 23 dient beispielsweise als Transmissionsbarriere für Wärmestrahlung. Häufig sind Quarzglasbauteile - beispielsweise Flansche - für den Einsatz bei Hochtemperaturanwendungen zur Blockierung von Wärmestrahlung vollständig oder teilweise aus opakem Quarzglas gefertigt. Zur Reinigung werden die Bauteile in der Regel mit tlusssäurehaltigen Chemikalien geätzt. Opakes Quarzglas zeigt jedoch eine geringe ältzresistenz, so dass die Lebensdauer derartiger opaker Quarzglasbauteile nach verhältnismäßig wenigen Reinigungszyklen beendet ist. Aus diesem Grund wird auf die opaken Flächenbereiche der Bauteile transparentes Quarzglas aufgeschmolzen. Dabei handelt es sich um einen Heißprozess, der leicht zu einem Verziehen des Bauteils führt, so dass eine aufwändige Nachbearbeitung notwendig ist.

Der schematisch in Figur 2b dargestellte, erfindungsgemäße Verbundkörper 20 bildet ein derartiges opakes, beidseitig mit transparentem Quarzglas belegtes Bauteil. Er ist dazu geeignet, die bisher aufwändig herzustellenden derartigen Bauteile zu ersetzen, wobei die transparenten Schichten 21, 22 ohne Schwierigkeiten in großer Dicke aufgebracht werden können.

Zur Herstellung des Verbundkörpers 20 werden die Platten 21, 22 zunächst entfettet und gereinigt wie dies anhand Beispiel 1 beschrieben ist. Anschließend wird auf der Oberseite der unteren Quarzglas-Platte 22 und auf die Unterseite der oberen Quarzglas-Platte 21 der oben beschriebene Schlicker in Form einer jeweils etwa 0,8 mm dicken Schlickerschicht 24, 25 durch Sprühen aufgetragen, wobei mittels einer Sprühdüse der leichtflüssige Schlicker aufgesprüht wird. Der Sprühvorgang wird beendet, sobald eine ungefähr gleichmäßige Belegung erreicht ist, wie dies schematisch **Figur 2a** zeigt.

Sofort danach wird die obere Platte 21 aufgelegt, wodurch sich eine Fixierung der Platten 21, 22 zueinander ergibt. Diese Anordnung ruht etwa 6 Stunden an Luft, wobei gleichzeitig die Schlickerschicht 24, 25 langsam trocknet. Die vollständige Trocknung erfolgt unter Einsatz eines IR-Strahlers an Luft. Die getrocknete Schlickerschicht 24; 25 ist rissfrei, und sie hat eine maximale Dicke von etwa 1,4 mm.

Nach dem Trocknen der Schlickerschicht wird der Verbundkörper 20 in einem Sinterofen unter Luftatmosphäre gesintert. Das Heizprofil beim Sintern umfasst eine Heizrampe, während der die Schlickerschicht von Raumtemperatur innerhalb von einer Stunde auf eine Heiztemperatur von 1250 °C erhitzt wird. Auf dieser Heiztemperatur wird der Verbundkörper 20 zwei Stunden lang gehalten. Aus der Schlickerschicht entsteht eine die beiden Quarzglas-Platten 21, 22 fest verbindende, gesinterte, jedoch noch opake Zwischenschicht 23, die in Bezug auf die Quarzglas-Platten 21 und 22 aus arteigenem Material besteht und die eine mittlere spezifische Dichte um 2,10 g/cm³ aufweist

Der so hergestellte Verbundkörper 20 wird im Sinterofen langsam abgekühlt, wie dies oben anhand Beispiel 1 beschrieben ist.

Der so hergestellte plattenförmige Verbundkörper 20 mit einer Stärke von etwa 5 mm ist opak. Er besteht aus drei Schichten 21, 22, 23, wovon die mittlere Schicht 23 mit einer Dicke von etwa 1 mm die Opazität bewirkt, und beiderseits von 2 mm dicken Schichten 21, 22 aus dichtem, transparentem Quarzglas belegt ist, das sich durch eine hohe Ätzbeständigkeit auszeichnet. Darüber hinaus ist der Verbundkörper 20 thermisch stabil, zeichnet sich durch eine hohe Temperaturwechselbeständigkeit auch bei Einsatztemperaturen oberhalb von 1000 °C aus, und erzeugt keinerlei Partikelprobleme.

Das oben beschriebene Verfahren ist auch zur Herstellung eines Verbundkörpers geeignet, der vollständig aus transparentem Quarzglas besteht. Hierzu ist es lediglich erforderlich, die Zwischenschicht 23 vollständig zu verglasen anstatt nur zu sintern. Hierzu wird der Verbundkörper nach dem Trocknen der Schlickerschicht in einem Verglasungsofen unter Luftatmosphäre verglast. Das Heizprofil beim Verglasen umfasst eine Heizrampe, während der die Schlickerschicht von Raumtemperatur innerhalb von vier Stunden auf eine Heiztemperatur von 1400 °C erhitzt wird. Auf dieser Heiztemperatur wird der Verbundkörper zwei Stunden lang gehalten. Aus der Schlickerschicht entsteht so eine zwei Quarzglas-Platten fest verbindende, gesinterte, transparente Zwischenschicht aus arteigenem Material mit einer mittleren spezifischen Dichte um 2,2 g/cm³. Auf diese Art und Weise lässt sich die nicht nur die Dicke von Quarzglas-Platten vergrößern, sondern es lassen sich auch Quarzglas-Blöcke aufbauen.

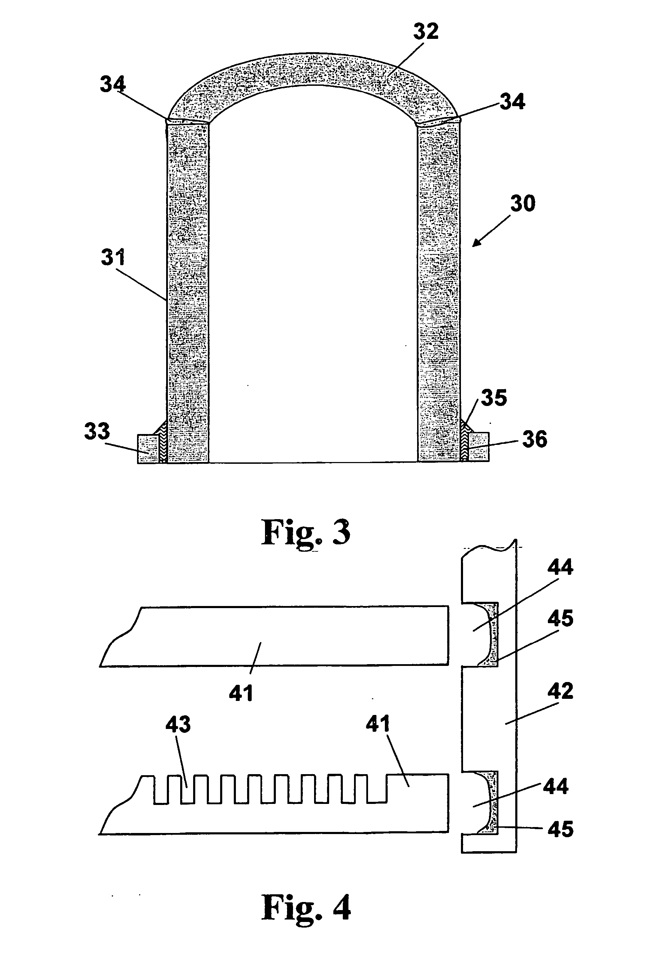

In den Figuren 3 bis 10 sind weitere Ausführungsbeispiele für das erfindungsgemäßen Verbund-Bauteil schematisch dargestellt, wobei für die Verbindung der Bauteile miteinander jeweils die anhand der Figuren 1 und 2 näher beschriebene Fügetechnik unter Einsatz eines SiO₂-Schlickers eingesetzt wird.

Figur 3 zeigt eine kuppelförmige Reaktorhülle 30, wie sie für Ätz- oder CVD-Prozesse bei der Halbleiterherstellung eingesetzt wird. Die Reaktorhülle 30 besteht aus einem rohrförmigen Seitenteil 31 aus transparentem Quarzglas, dessen Oberseite mit einem kuppelförmigen Deckelement 32 aus ebenfalls transparentem Quarzglas gasdicht abgeschlossen ist, und an dessen Unterseite ein Flansch 33 aus opakem Quarzglas vorgesehen ist. Das Deckelement 32 und der Flansch 33 sind am Seitenteil 31 mittels Fügeverbindungen unter Einsatz des oben genannten Schlickers und anschließendem Verglasen mittels Brenner fixiert. Die Fügeverbindung zwischen dem Seitenteil 31 und dem Deckelelement 32 ist in Form einer Stumpfnaht 34 ausgeführt. Die Verbindung zwischen Flansch 33 und dem Seitenteil 31 umfasst einen Bereich 36 zur Abdichtung des Ringspalts zwischen Flansch 33 und Seitenteil 31, der im Bereich der Stirnseite über eine Tiefe von etwa 100 µm vollständig verglast und ansonsten opak ist, und eine Kehlnaht 35 zur mechanischen Stabilisierung. Die Nahtverbindungen bestehen jeweils aus reinem SiO₂ und damit aus einem in Bezug auf die Reaktorhüll-Bauteile arteigenem Material und sie weisen eine mittlere spezifische Dichte von etwa 2,20 g/cm³ auf.

Auf ähnliche Art und Weise können Quarzglas-Behälter beliebiger Form und Größe aus einfachen platten-, ring- und kreisförmigen Einzelelementen zusammengefügt werden. Als Beispiele seien Küvetten aus Quarzglas oder Tanks für die Aufnahme von Ätzmitteln genannt.

**Figur 4** zeigt schematisch einen Verfahrensschritt zum Fügen eines Waferträgers aus mehreren Einzelteilen mittels des erfindungsgemäßen Verfahrens. Der Waferträger besteht aus zwei sich gegenüberliegenden Seitenflanschen 42 aus transparentem Quarzglas (in Figur 4 ist einer der Seitenflansche dargestellt), die mittels Stegen 41 miteinander verbunden sind. Die Stege 41, die zur Lagerung von Wafern dienen und zu diesem Zweck mit Querschlitzen 43 versehen sind, sind mittels der erfindungsgemäßen Fügetechnik unter Einsatz einer SiO₂-haltigen Verbindungsmasse mit den Seitenflanschen 42 verbunden. Hierzu sind in den Seitenflanschen kreisförmige Bohrungen 44 vorgesehen, in die Fügemasse 45 in Form des oben beschriebenen Schlickers gefüllt wird, bevor die Stege 41 eingesetzt werden. Die so erzeugten Fügestellen werden getrocknet und anschließend mit einer Brennerflamme transparent verglast, so dass die so erhaltenen Fügeverbindungen aus einem in Bezug auf den Waferträger arteigenen Material bestehen und eine mittlere spezifische Dichte von etwa 2,20 g/cm³ aufweisen.

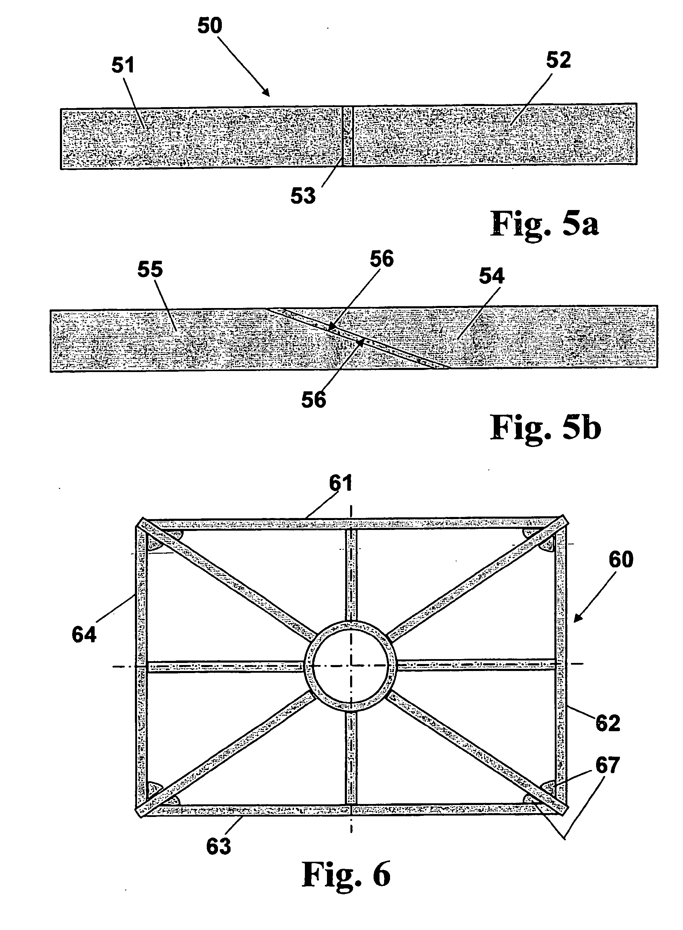

In **Figur 5a** ist ausschnittsweise eine transparente Quarzglas-Platte 50 mit einer Dicke von 30 mm dargestellt, die aus Einzelteilen 51, 52 zusammengesetzt ist. Die Einzeleile 51, 52 sind über Stoßnähte 53 aus transparentem Quarzglas miteinander verbunden. Die Stoßnähte 53 werden erzeugt, indem die Quarzglas-Platten 51, 52 unter Belassen eines Spaltes von etwa 1,5 mm zunächst zueinander stoßweise fixiert werden und danach die Spalte mit einem SiO₂-Schlicker aufgefüllt werden. Der Schlicker trocknet 5 Stunden an Luft (wie anhand den Figur 1 beschrieben) und wird anschließend mittels einer Knallgasflamme verglast. Die Oberseite der so erzeugten Verbundes wird anschließend plan geschliffen und poliert, so dass eine optisch homogene Quarzglas-Platte 50 erhalten wird. Die Nahtverbindungen bestehen jeweils aus reinem SiO₂ und damit aus einem in Bezug auf die Einzelteile 50, 51 arteigenem Material und sie weisen eine mittlere spezifische Dichte von etwa 2,20 g/cm³ auf.

Auf diese Art und Weise können großflächige Quarzglas-Platten ohne Heißverformungsprozess erzeugt werden.

**Figur 5b** zeigt eine alternative Fügetechnik für die Herstellung großflächiger Quarzglas-Platten durch stoßweise Aneinanderreihung und Fixierung kleinerer Plattenelemente 54, 55. Hierbei werden die Plattenelemente 54, 55 jeweils mit abgeschrägten Kanten 56 versehen. Die Abschrägungen werden zueinander fixiert, wie dies Figur 5b zeigt und in den Spalt wird SiO₂-Schlicker gefüllt. Nach dem Trocknen und Verglasen des Schlickers, wie oben anhand Figur 5a beschrieben, wird eine transparente Quarzglas-Platte erhalten, die aufgrund der Größe und Anordnung der Fügestellen besonders belastbar auf Biegung ist.

**Figur 6** zeigt schematisch einen aus platten- und rohrförmigen Einzelelementen gefügten Bauteil-Verbund in Form eines Leichtgewicht-Spiegelträgers 60. Derartige Spiegelträger werden beispielsweise bei Teleskopen eingesetzt. Außer einem möglichst geringen Gewicht liegt hier ein besonderes Augenmerk auf der Formstabilität bei Temperaturänderungen. Aufgrund seines geringen thermischen Ausdehnungskoeffizienten ist Quarzglas für die Ausbildung des Spiegelträgers geeignet. Das geringe Gewicht wird erreicht, indem der Spiegelträger aus einfachen, leichten Quarzglas-Formteilen zusammengesetzt wird. Allerdings verursacht das Verschweißen der Quarzglas-Formteile miteinander ein Verziehen des Spiegelträgers. Werden die Quarzglas- Formteile nach dem Stand der Technik miteinander verklebt, führt dies wegen der unangepassten thermischen Ausdehnungskoeffizienten von Klebemittel und Quarzglas zu Formänderungen beim Betrieb.

Das erfindungsgemäße Verfahren ermöglicht erstmals die Herstellung leichtgewichtiger Spiegelträger aus Quarzglas-Formteilen durch Kleben, bei denen die Gefahr von Formänderungen bei Temperaturschwankungen nicht besteht, da das Klebemittel arteigen in Bezug auf das Quarzglas der Formteile ist.

Figur 6 zeigt schematisch einen Teleskop-Spiegelträger 60 aus Plattenelementen 61 bis 64, die mittels Stegen 65 und eines Ringelementes 66 miteinander verbunden sind. Die Verbindung beruht auf (nur in kleiner Anzahl und schematisch dargestellter) Kehlnähten 67 zwischen den jeweiligen Formteilen. Für die Herstellung der Kehlnähte wird das oben beschriebene erfindungsgemäße Verfahren eingesetzt. Die Kehlnähte 67 werden bei möglichst geringer Temperatur gesintert, um ein Verziehen zu vermeiden. Sie sind opak, bestehen jeweils aus reinem SiO₂ und damit aus einem in Bezug auf die Plattenelemente 61 bis 64 arteigenen Material und sie weisen eine mittlere spezifische Dichte von etwa 2,10 g/cm³ auf.

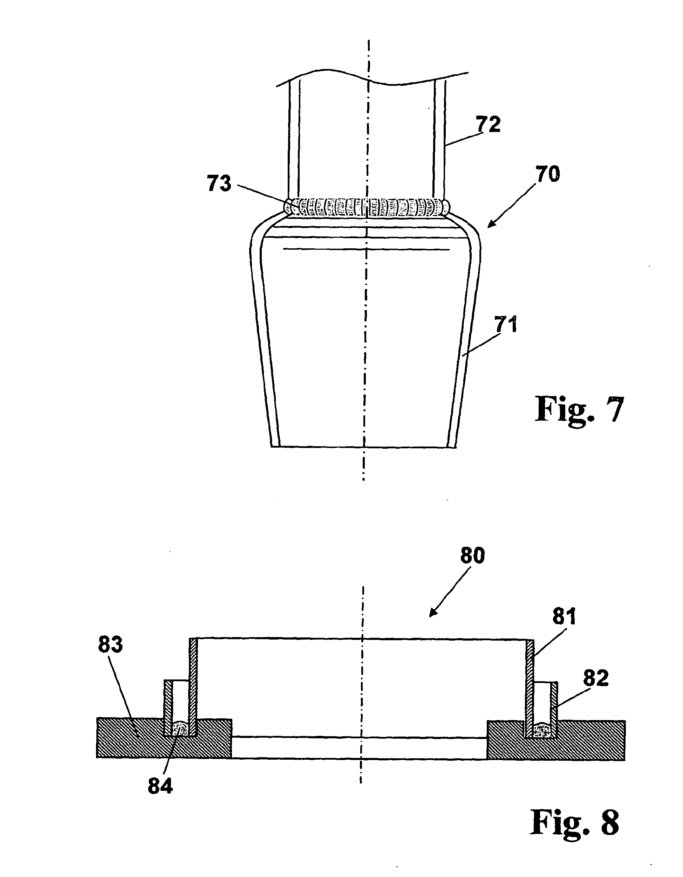

Bei der Ausführungsform des erfindungsgemäßen Bauteil-Verbundes gemäß **Figur 7** in Form eines Laborgerätes 70 wird zunächst ein Schliffteil 71 mit Kegelschliff erzeugt und dieses anschließend mit einem hülsenförmigen Schaft 72 durch Fügen unter Einsatz einer SiO₂-haltigen Verbindungsmasse verbunden, die als umlaufende Kehlnaht 73 ausgebildet ist.

Die umlaufende Kehlnaht 73 besteht aus reinem SiO₂ und damit aus einem in Bezug auf das Schliffteil 71 und den Schaft 72 arteigenen Material und sie weist eine mittlere spezifische Dichte von etwa 2,20 g/cm³ auf.

In gleicher oder ähnlicher Weise können andere Laborgeräte aus Quarzglas aus einfachen Einzelelementen zusammengesetzt werden.

**Figur 8** zeigt einen Ausschnitt eines erfindungsgemäßen Bauteil-Verbundes 80 in Form koaxial zueinander angeordneter und auf einem Quarzglasring 83 fixierter Quarzglasrohre 81, 82 in einer Seitenansicht.

Mittels einer SiO₂-haltigen Verbindungsmasse 84 gemäß der vorliegenden Erfindung sind die Quarzglasrohre 81, 82 miteinander verbunden und gleichzeitig in einer Ringnut des Quarzglasrings 83 fixiert.

Die Fixierungsmasse ist opak und besteht aus reinem SiO₂. Sie ist daher arteigen in Bezug auf die Quarzglasrohre 81 und 82 sie weist eine mittlere spezifische Dichte von etwa 2,10 g/cm³ auf.

In gleicher oder ähnlicher Art und Weise werden Anordnungen koaxialer Quarzglasrohre zum Beispiel zur Herstellung chemischer Apparaturen oder für die Herstellung von Flammenhydrolyse-Brennern aus Quarzglas hergestellt, wobei auf den Quarzglasring 83 auch verzichtet werden kann.

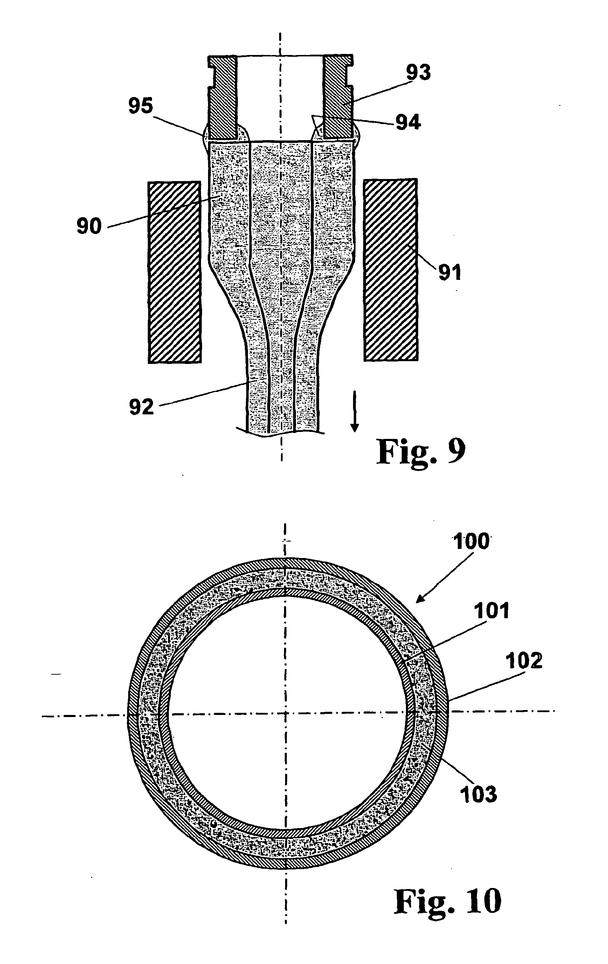

**Figur 9** zeigt schematisch eine Vorform 90 für die Herstellung optischer Fasern, die in einem Ofen 91 zonenweise erweicht und dabei zu einem Strang 92 elongiert wird. Für die Halterung der Vorform ist ein Haltezylinder 93 aus Quarzglas vorgesehen, der mit dem oberen stirnseitigen Ende der Vorform 90 stoßweise verbunden ist. Für die Herstellung dieser Verbindung wird das erfindungsgemäße Fügeverfahren eingesetzt, wobei an der Innenseite des Haltezylinders 93 eine umlaufende Kehlnaht 94, und am Außenmantel ein die Stoßstelle überlappender und umlaufender Außenwulst 95 aus teils opaken, teils transparentem Quarzglas vorgesehen sind. Kehlnaht 94 und Außenwulst 95 werden durch Sintern und Verglasen einer SiO₂-Schlickerschicht mittels einer Brennerflamme erzeugt, wobei lediglich die äußeren Bereiche der Schlickerschicht vollständig verglast werden. Dadurch wird der Verbund einer im Vergleich zum Anschmelzen des Haltezylinders geringen Temperaturbelastung ausgesetzt und die Vorform 90 dadurch wenig beeinträchtigt.

Kehlnaht 94 und Außenwulst 95 bestehen jeweils aus reinem SiO₂ und damit aus einem in Bezug auf die Vorform 90 arteigenen Material und sie weisen eine mittlere spezifische Dichte von etwa 2,15 g/cm³ auf.

Als weiteres Beispiel für das erfindungsgemäße ist in diesem Zusammenhang das Zusammenfügen von halbschlalenförmigen Körpern, beispielsweise durch Längsschlitzen erzeugte Rohrhälften, zu nennen.

**Figur 10** zeigt einen radialen Querschnitt eines opaken Quarzglasrohr 100, das sich aus einem Innenrohr 101 und einem Außenrohr 102, die beide aus transparentem Quarzglas bestehen, zusammensetzt. Das Innenrohr 101 hat einen Innendurchmesser von 50 mm und einen Außendurchmesser von 54 mm. Das Außenrohr 102 einen Innendurchmesser von 60 mm und einen Außendurchmesser von 65 mm. Der verbleibende Spalt mit einer Spaltweite von 3 mm zwischen den Quarzglasrohren 101, 102 ist mit einer opaken SiO₂-Verbindungsmasse 103 im Sinne der vorliegenden Erfindung gefüllt, die hierbei einerseits zur Verbindung der Quarzglasrohre 101, 102 miteinander dient und die andererseits dem Rohrverbund 100 seine Opazität verleiht, die der Abschirmung von Wärmestrahlung dient.

Die SiO₂-Verbindungsmasse 103 bestehen aus reinem SiO₂ und damit aus einem in Bezug auf die Quarzglasrohre 101, 102 arteigenen Material und sie weist eine mittlere spezifische Dichte von etwa 2,10 g/cm³ auf.

Bei den oben erläuterten Ausführungsbeispielen des erfindungsgemäßen Bauteil-Verbundes bestehen die einzelnen Bauteile aus undotiertem Quarzglas. Idealerweise besteht daher auch die jeweils für die Fügeverbindung eingesetzte SiO₂-haltige Verbindungsmasse in diesen Fällen aus undotiertem Quarzglas. Bei Anwesenheit eines oder mehrerer Dotierstoffe im Quarzglas der Bauteile, die den thermischen Ausdehnungskoeffizienten von Quarzglas verändern, ist die SiO₂-haltige Verbindungsmasse so gewählt, dass ihr thermischer Ausdehnungskoeffizient und dessen Temperaturabhängigkeit ähnlich zu demjenigen des Bauteils ist, und bei unterschiedlich dotierten Bauteilen vorzugsweise zwischen den jeweiligen Ausdehnungskoeffizienten liegt.

Das Aufbringen des Schlickers zwischen oder auf den Verbindungsflächen der Bauteile wird durch die Fließeigenschaften des Schlickers beeinflusst. Ein großflächig homogener Schichtauftrag wird durch eine sogenannte Dilatanz erleichtert, wohingegen ansonsten eher die sogenannte Strukturviskosität oder Thixotropie erwünscht ist. Die als Strukturviskosität "Thixotropie" bezeichnete Eigenschaft des Schlickers, zeigt sich darin, dass seine Viskosität mit der Schergeschwindigkeit (etwa beim Rühren) verringert wird. Dies ist auf nachlassende Wechselwirkungen zwischen den amorphen SiO₂-Teilchen beim Auftreten von Scherkäften zurückzuführen. Nach dem Wegfall der Scherkräfte - im Ruhezustand der Schlickermasse im Kontakt mit den Verbindungsflächen der Bauteile - verstärken sich diese Wechselwirkungen wieder und führen zur Ausbildung physikalischer oder chemischer Bindungen zwischen den amorphen SiO₂-Teilchen der Schlickermasse untereinander. Durch Einsatz gröberer SiO₂-Teilchen kann die Strukturviskosität des Schlickers erhöht werden.

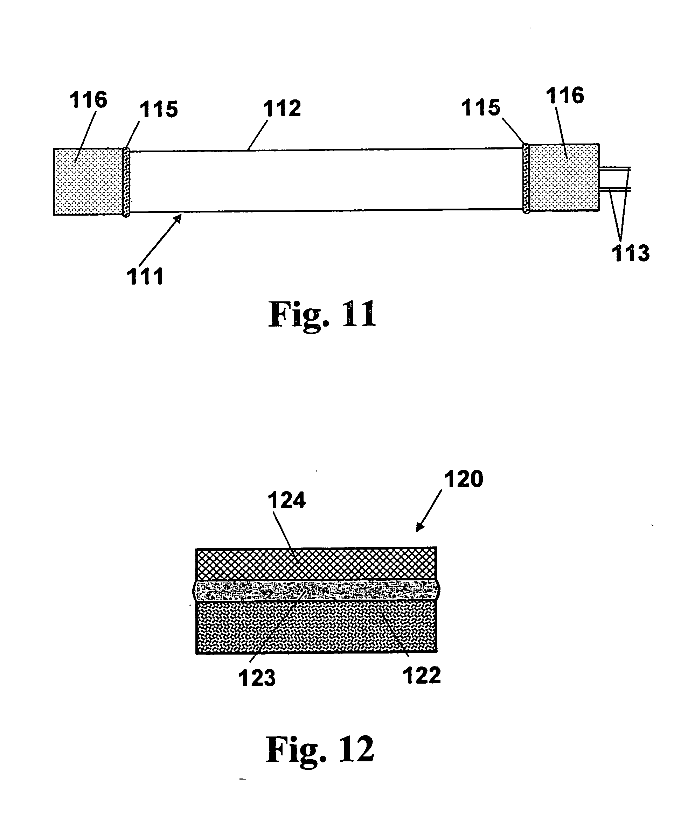

**Figur 11** zeigt schematisch eine UV-Entladungslampe 111, wie sie zum Beispiel im Bereich der Hautbräunungsgeräte oder für die Entkeimung von Oberflächen oder Flüssigkeiten eingesetzt wird. Die Entladungslampe 111 besteht im Wesentlichen aus einem rohrförmigen, transparenten Entladungsgefäß 112 aus Quarzglas, dessen stirnseitige Enden mit Kappen 116 aus Aluminiumoxid abgeschlossen sind. Die elektrischen Anschlüsse 113 für die innerhalb des Entladungsgefäßes 112 angeordneten Elektroden sind durch einen der Kappen 116 geführt.

Die Aluminiumoxid-Kappen 116 werden unter Einsatz des erfindungsgemäßen Fügemittels verklebt. Hierzu werden die zu verklebenden Oberflächen von Entladungsgefäß 112 und Kappen 116 mittels Alkohol gereinigt. Anschließend wird die oben beschriebene Schlickermasse auf die stirnseitigen Enden des Entladungsgefäßes 112 aufgebracht und darauf die Kappen 116 gepresst, wobei ein kleine Menge der Schlickermasse aus dem Spalt zwischen der Mantelfläche des Entladungsgefäßes 112 und der Kappe 116 herausquillt, und dabei einen umlaufenden Schlicker-Wulst 115 bildet.

Der so hergestellte Verbund ruht etwa 6 Stunden an Luft, wobei gleichzeitig die Schlickerschicht langsam trocknet. Die vollständige Trocknung erfolgt an Luft. Nach dem Trocknen ist die Verbindungsmasse rissfrei. Die getrocknete Verbindungsmasse wird anschließend unter Luft verglast. Dabei wird darauf geachtet, dass die hitzeempfindlichen elektrischen Teile innerhalb der Kappe 116 und des Entladungsgefäßes 112 nicht auf Temperaturen oberhalb von 200 °C erhitzt werden. Dies gelingt durch den Einsatz eines nur lokal und auch nur kurzzeitig auf den Schlicker-Wulst 115 einwirkenden CO₂-Lasers, indem dieser entlang der freien Oberfläche des Schlicker-Wulstes 115 bewegt und dieser solange erhitzt wird, bis er weitgehend transparent ist und eine mittlere spezifische Dichte um 2,15 g/cm³ aufweist. Die restliche Verbindungsmasse zwischen den Kappen 116 und dem Entladungsgefäß 112 bleibt opak, so dass sich die mittlere spezifische Dichte gegenüber der getrockneten Verbindungsmasse nicht wesentlich ändert.

Der Verbund aus Entladungsgefäß 112 und Aluminiumoxid-Kappen 116 ist mechanisch stabil, gasdicht und zeichnet sich durch Partikelfreiheit aus. Die Einsatztemperatur ist jedoch auf Temperaturen unterhalb von 200 °C beschränkt.

**Figur 12** zeigt schematisch einen Single-Wafer-Halter 120 aus Quarzglas für die Prozessierung von 8 Zoll-Wafern. Der Halter 120 bildet im Wesentlichen einen Ring mit einem Außendurchmesser von 256 mm und mit einem Innendurchmesser von 196 mm, der mit einer umlaufenden Vertiefung zur Aufnahme des Wafers versehen ist.

Er besteht aus einem Verbundkörper aus einer Quarzglas-Platte 122 und einer mittels Tiefziehen hergestellten, handelsüblichen Keramikfolie 124 aus Al₂O₃. Die Quarzglas-Platte 122 hat eine Stärke von 12 mm und die Al₂O₃-Folie 124 weist eine Dicke von ca. 1 mm auf. Diese Bauteile 122, 124 sind mittels einer 0,4 mm starken opaken SiO₂-haltigen Zwischenschicht 123 miteinander verbunden, die auf Basis des erfindungsgemäßen Fügemittels folgendermaßen hergestellt wird:

Die Quarzglas-Platte 122 wird zunächst entfettet und in HF-haltiger Ätzlösung gereinigt. Anschließend wird auf der Oberseite der Quarzglas-Platte 122 das erfindungsgemäße Fügemittel in Form des oben beschriebenen Schlickers in Form einer etwa 0,8 mm dicken Schlickerschicht 123 durch Sprühen aufgetragen, wobei mittels einer Sprühdüse der leichtflüssige Schlicker aufgesprüht wird. Der Sprühvorgang wird beendet, sobald eine ungefähr gleichmäßige Belegung erreicht ist.

Sofort danach wird die Al₂O₃-Folie 124 aufgelegt, wodurch sich eine Fixierung Bauteile 122, 124 zueinander ergibt. Diese Anordnung ruht etwa 6 Stunden an Luft, wobei gleichzeitig die Schlickerschicht 123 langsam trocknet. Die vollständige Trocknung erfolgt in einem Sinterofen an Luft bei einer Temperatur um 200 °C. Die getrocknete Schlickerschicht 123 ist rissfrei.

Der so hergestellte Wafer-Halter 120 zeichnet sich infolge der Belegung mit der Al₂O₃-Folie durch eine sehr hohe Ätzbeständigkeit aus, auch gegenüber fluorhaltigen Prozessmedien und er erzeugt keinerlei Partikelprobleme. Seine Temperaturwechselbeständigkeit ist ausreichend, sofern die bei Einsatztemperaturen unterhalb von 200 °C liegen, was bei Anwendungen des Halters 120 für die Single-Wafer-Prozessierung ohne weiteres zu gewährleisten ist.

## Patentansprüche

1. Verfahren zum Verbinden von Bauteilen aus Quarzglas durch stoffschlüssiges Fügen mittels einer SiO₂-haltigen Verbindungsmasse, die zwischen Verbindungsflächen der Bauteile ausgebildet wird, und die eine chemische Zusammensetzung aufweist, die arteigen in Bezug auf Quarzglas ist, **dadurch gekennzeichnet, dass** das Ausbilden der SiO₂-haltigen Verbindungsmasse folgende Verfahrensschritte umfasst:
(a) Bereitstellen eines wässrigen Schlickers, der amorphe SiO₂-Teilchen mit einem SiO₂-Gehalt von mindestens 99,9 Gew.-% enthält, und die Teilchengrößen im Bereich bis 500 µm aufweisen, wobei amorphe SiO₂-Teilchen mit Teilchengrößen im Bereich zwischen 1 µm und 50 µm den größten Volumenanteil ausmachen, welches ein Nassvermahlen amorpher SiO₂-Ausgangskörnung umfasst,
(b) Ausbilden einer Schlickermasse zwischen den zueinander fixierten Verbindungsflächen,
(c) Trocknen der Schlickermasse, und
(d) Verfestigen der Schlickermasse durch Erhitzen unter Bildung der SiO₂-haltigen Verbindungsmasse, deren SiO₂-Gehalt sich jeweils von denjenigen der zu verbindenden Quarzglas-Bauteile um maximal 3 Gew.-% unterscheidet.

2. Verfahren nach Anspruch 1, **dadurch gekennzeichnet, dass** die amorphen SiO₂-Teilchen Teilchengrößen im Bereich bis 100 µm aufweisen.

3. Verfahren nach einem der vorhergehenden Ansprüche, **dadurch gekennzeichnet, dass** der Feststoffgehalt des Schlickers beim Erzeugen der Schlickermasse zwischen den Verbindungsflächen mindestens 65 Gew.-%, vorzugsweise mindestens 80 Gew.-%, besonders bevorzugt mindestens 83 Gew.-%, beträgt.

4. Verfahren nach einem der vorhergehenden Ansprüche, **dadurch gekennzeichnet, dass** der Schlicker auf einen pH-Wert im Bereich zwischen 3 und 5,5 eingestellt wird.

5. Verfahren nach einem der vorhergehenden Ansprüche, **gekennzeichnet durch** eine Einwirkungszeit zwischen dem Ausbilden der Schlickermasse zwischen den zueinander fixierten Verbindungsflächen und dem Trocknen der Schlickermasse.

6. Verfahren nach einem der vorhergehenden Ansprüche, **dadurch gekennzeichnet, dass** das Verfestigen ein Sintern der Schlickermasse unter Bildung einer mindestens teilweise opaken verfestigten Verbindungsmasse umfasst.

7. Verfahren nach Anspruch 6, **dadurch gekennzeichnet, dass** das Sintern eine Temperaturbehandlung der Schlickermasse bei einer Temperatur im Bereich zwischen 800 °C und 1450 °C, bevorzugt bei einer Temperatur unterhalb von 1300 °C umfasst.

8. Verfahren nach einem der vorhergehenden Ansprüche, **dadurch gekennzeichnet, dass** das Verfestigen ein Verglasen der Schlickermasse unter Bildung einer mindestens teilweise transparenten, verfestigten SiO₂-haltigen Verbindungsmasse umfasst.

9. Verfahren nach Anspruch 8, **dadurch gekennzeichnet, dass** das Verglasen unter Einsatz einer Heizquelle erfolgt, deren maximale Heizwirkung örtlich auf den Bereich der Schlickermasse begrenzbar ist.

10. Verfahren nach einem der vorhergehenden Ansprüche, **dadurch gekennzeichnet, dass** der Schlicker einen oder mehrere Dotierstoffe in Form von Al₂O₃, TiO₂, Y₂O₃, AIN, Si₃N₄, ZrO₂, BN, HfO₂, Si, Yb₂O₃ und/oder SiC enthält.

11. Verfahren nach einem der vorhergehenden Ansprüche, **dadurch gekennzeichnet, dass** mindestens eines der zu verbindenden Bauteile einen Dotierstoff enthält, und dass der wässrige Schlicker Partikel dieses Werkstoffes als Dotierstoff enthält.

12. Bauteil-Verbund, erhalten durch ein Verfahren gemäß einem der Ansprüche 1 bis 11, umfassend mindestens zwei Bauteile aus Quarzglas, die mittels einer SiO₂-haltigen Verbindungsmasse miteinander verbunden sind, wobei die SiO₂-haltige Verbindungsmasse amorph ist und eine chemische Zusammensetzung aufweist, die arteigen in Bezug auf Quarzglas ist, **dadurch gekennzeichnet, dass** die SiO₂-haltige Verbindungsmasse einen SiO₂-Anteil von mindestens 99,9 Gew.-% aufweist, wobei sich der SiO₂-Gehalt der SiO₂-haltigen Verbindungsmasse jeweils von denjenigen der zu verbindenden Quarzglas-Bauteile um maximal 3 Gew.-% unterscheidet, mindestens teilweise opak ist und aus amorphen, gesinterten oder verglasten SiO₂-Teilchen mit Teilchengrößen im Bereich bis 500 µm hergestellt ist, wobei SiO₂-Teilchen mit Teilchengrößen im Bereich zwischen 1 µm und 50 µm den größten Volumenanteil der Verbindungsmasse ausmachen.

13. Bauteil-Verbund nach Anspruch 12, **dadurch gekennzeichnet, dass** die spezifische Dichte der SiO₂-haltigen Verbindungsmasse mindestens 2,0 g/cm³, vorzugsweise mindestens 2,1g/cm³ beträgt.

14. Bauteil-Verbund nach einem der Ansprüche 12 oder 13, **dadurch gekennzeichnet, dass** die SiO₂-haltige Verbindungsmasse Dotierstoffe in Form von Al₂O₃, TiO₂, Y₂O₃, AIN, Si₃Nₐ, ZrO₂, BN, HfO₂, Si, Yb₂O₃ und/oder SiC, vorzugsweise als Teilchen in amorpher Form enthält.

15. Bauteil-Verbund nach einem der Ansprüche 12 bis 14, **dadurch gekennzeichnet, dass** eines der Bauteile einen oder mehrere der Dotierstoffe Al₂O₃, TiO₂, Y₂O₃, AIN, Si₃N₄, ZrO₂, B₂O₃, HfO₂, oder Yb₂O₃ enthält.

16. Bauteil-Verbund nach einem der Ansprüche 12 bis 15, **dadurch gekennzeichnet, dass** eine opake SiO₂-haltige Verbindungsmasse im Spalt zwischen zwei koaxial zueinander angeordneten Quarzglasrohren erzeugt ist.

17. Verwendung einer pulverförmigen, pastösen oder flüssigen Masse, die amorphe SiO₂-Teilchen mit Teilchengrößen im Bereich bis 500 µm aufweist, wobei amorphe SiO₂-Teilchen mit Teilchengrößen im Bereich zwischen 1 µm und 50 µm den größten Volumenanteil ausmachen, als SiO₂-haltiges Fügemittel mit einem SiO₂-Anteil von mindestens 99,9 Gew.-% zum Verbinden von Bauteilen aus Quarzglas durch stoffschlüssiges Fügen gemäß einem Verfahren nach einem der Ansprüche 1 bis 11.

18. Verwendung nach Anspruch 17, **dadurch gekennzeichnet, dass** die amorphen SiO₂-Teilchen Teilchengrößen im Bereich bis 100 µm aufweisen.

## Claims

1. Method for the bonding of components made of quartz glass by substance-to-substance bonding by means of a SiO₂-containing bonding mass that is formed between connecting surfaces of the components and has a chemical composition that is generic with respect to quartz glass, **characterized in that** the formation of the SiO₂-containing bonding mass comprises the following procedural steps:
(a) provision of an aqueous slurry containing amorphous SiO₂ particles having an SiO₂ content of at least 99.9 wt-%, whereby the particle sizes of the amorphous SiO₂ particles are in the range of up to 500 µm, whereby amorphous SiO₂ particles with particle sizes in the range between 1 µm and 50 µm account for the largest volume fraction, comprising a wet comminution of amorphous SiO₂ starting grains,
(b) formation of a slurry mass between the connecting surfaces which are fixed in position with regard to each other;
(c) drying of the slurry mass; and
(d) solidification of the slurry mass by heating so as to form the SiO₂-containing bonding mass, the SiO₂ content of the bonding mass differs from that of the quartz glass components to be bonded by maximally 3 wt-%.

2. Method according to claim 1, **characterized in that** the particle sizes of the amorphous SiO₂ particles are in the range of up to 100 µm.

3. Method according to any one of the preceding claims, **characterized in that** the solids content of the slurry during the generation of the slurry mass between the connecting surfaces is at least 65 wt-%, preferably at least 80 wt-%, particularly preferably at least 83 wt-%.

4. Method according to any one of the preceding claims, **characterized in that** the slurry is set to a pH value in the range between 3 and 5.5.

5. Method according to any one of the preceding claims, **characterized by** an exposure time between the formation of the slurry mass between the connecting surfaces being fixed in position with respect to each other, and the drying of the slurry mass.

6. Method according to any one of the preceding claims, **characterized in that** the solidification comprises sintering of the slurry mass with formation of an at least partly opaque solidified bonding mass.

7. Method according to claim 6, **characterized in that** the sintering comprises a temperature treatment of the slurry mass at a temperature in the range between 800 °C and 1.450 °C, preferably at a temperature below 1.300 °C.

8. Method according to any one of the preceding claims, **characterized in that** the solidification comprises a vitrification of the slurry mass with formation of an at least partly transparent, solidified SiO₂-containing bonding mass.

9. Method according to claim 8, **characterized in that** the vitrification is performed through the use of a heat source whose maximal heating effect can be limited locally to the scurry mass.

10. Method according to any one of the preceding claims, **characterized in that** the slurry contains one ore more doping agent(s) in the form of Al₂O₃, TiO₂, Y₂O₃, AlN, Si₃N₄, ZrO₂, BN, HfO₂, Si, Yb₂O₃ and/or SiC.

11. Method according to any one of the preceding claims, **characterized in that** at least one of the components to be connected contains a doping agent, and **in that** the aqueous slurry contains particles made of this material as doping agent.

12. Component assembly obtained by performing the method according to the claims 1 to 11, comprising at least two components made of quartz glass, which are connected to each other by means of a SiO₂-containing bonding mass, wherein the SiO₂-containing bonding mass is amorphous and has a chemical composition that is generic with regard to quartz glass, **characterized in that** the SiO₂-content of the SiO₂-containing bonding mass is at least 99.9 wt-%., the SiO₂ content of the SiO₂-containing bonding mass differs from each of the quartz glass components to be bonded by maximally 3 wt-%, and SiO₂-containing bonding mass is at least partially opaque and it is manufactured from amorphous, sintered or vitrified SiO₂ particles with particle sizes in the range of up to 500 µm, whereby SiO₂ particles with particle sizes in the range between 1 µm and 50 µm account for the largest volume fraction of the bonding mass.

13. Component assembly according to claim 12, **characterized in that** the specific density of the SiO₂-containing bonding mass is at least 2.0 g/cm³, preferably at least 2.1 g/cm³.

14. Component assembly according to any one of the claims 12 or 13, **characterized in that** the SiO₂-containing bonding mass contains doping agents in the form of Al₂O₃, TiO₂, Y₂O₃, AIN, Si₃N₄, ZrO₂, BN, HfO₂, Si, Yb₂O₃ and/or SiC, preferably in the form of particles in amorphous form.

15. Component assembly according to any one of the claims 12 to 14, **characterized in that** one of the components contains one or more of the doping agent(s), Al₂O₃, TiO₂, Y₂O₃, AIN, Si₃Na, ZrO₂, BN, HfO₂, Si, Yb₂O₃ and/or SiC.

16. Component assembly according to any one of the claims 12 to 15, **characterized in that** an opaque SiO₂-containing bonding mass is produced in the gap between two quartz glass tubes that are in a coaxial arrangement with respect to each other.

17. Use of a powder-like, paste-like or liquid mass comprising amorphous SiO₂ particles with particle sizes in the range of up to 500 µm, whereby amorphous SiO₂ particles with particle sizes in the range between 1 µm and 50 µm account for the largest volume fraction, for providing a SiO₂-containing bonding mass having a SiO₂-content of at least 99.9 wt.-% for bonding components by means of substance-to-substance bonding by using a method according to any one of the claims 1 to 11.

18. Use according to claim 17, **characterized in that** the amorphous SiO₂ particles comprise particle sizes in the range of up to 100 µm.

## Revendications

1. Procédé pour la liaison de composants en matériau en verre de quartz par liaison de matière au moyen d'une masse de liaison contenant du SiO₂ qui est réalisée entre des surfaces de liaison des composants et qui présente une composition chimique semblable au verre de quartz, **caractérisé en ce que** la formation de la masse de liaison SiO₂ comporte les étapes suivantes de procédé:
(a) préparation d'une barbotine aqueuse qui comporte des particules amorphes SiO₂ avec une teneur SiO₂ d'au moins 99,9 pour cent en poids, et la taille des particules sont de l'ordre de 500 µm, les particules amorphes SiO₂ représentant avec une taille comprise entre 1 µm et 50 µm la part volumique la plus importante, qui comprend un broyage humide de grains initiaux amorphes SiO₂,
b) formation d'une masse de barbotine entre deux surfaces de liaison fixées entre elles,
c) séchage de la masse de barbotine
d) durcissement de la masse de barbotine par chauffage en formant la masse de liaison contenant du SiO₂, dont la teneur en SiO₂ se différencie d'au moins 3 pour cent en poids de celles des composants de verre de quartz à relier.

2. Procédé selon la revendication 1, **caractérisé en ce que** les particules amorphes SiO₂ présentent des tailles dans la plage des 100 µm.

3. Procédé selon l'une quelconque des revendications précédentes, **caractérisé en ce que** la teneur en substance solide de la barbotine est de l'ordre d'au moins 65 % en poids, de préférence au moins 80 pour cent en poids et particulièrement de préférence au moins 83 pour cent en poids.

4. Procédé selon l'une des revendications précédentes, **caractérisé en ce que** la barbotine est ajustée à une valeur de pH comprise entre 3 et 5,5.

5. Procédé selon l'une des revendications précédentes, **caractérisé par** un temps d'action entre la formation de la masse de barbotine entre les surfaces de liaison à fixer entre elles et le séchage de la masse de barbotine.

6. Procédé selon l'une des revendications précédentes, **caractérisé en ce que** le durcissement comprend un frittage de la masse de barbotine d'au moins une masse de liaison partiellement opaque durcie.

7. Procédé selon l'une des revendications précédentes, **caractérisé en ce que** le frittage comprend un traitement thermique de la masse de barbotine à une température comprise entre 800°C et 1450°C de préférence à une température inférieure à 1300 °C.

8. Procédé selon la revendication 8, **caractérisé en ce que** le durcissement de la masse de barbotine comprend une vitrification de la masse de barbotine par formation d'au moins une masse de liaison partiellement transparente durcie, contenant du SiO₂.

9. Procédé selon la revendication 8, **caractérisé en ce que** la vitrification s'effectue par une source de chauffage dont l'action maximale de chauffage est limitable localement à la zone de la masse de barbotine.

10. Procédé selon l'une des revendications précédentes, **caractérisé en ce que** la barbotine contient une ou plusieurs substances de dopage sous forme de Al₂O₃, TiO₂, Y₂O₃, AIN, Si₃N₄, ZrO₂, BN, HfO₂, Si, Yb₂O₃ et/ou SiC.

11. Procédé selon l'une des revendications précédentes, **caractérisé en ce qu'**au moins l'un des composants à lier contient une substance de dopage et **en ce que** la barbotine aqueuse contient des particules de cette substance en tant que matière de dopage.

12. Composite obtenu par un procédé selon l'une des revendications 1 à 11, comprenant au moins deux composants de verre de quartz qui sont reliés entre eux par une masse de liaison contenant du SiO₂, la masse de liaison contenant du SiO₂ étant amorphe et présentant une composition chimique qui est similaire au verre de quartz, **caractérisé en ce que** la masse de liaison contenant du SiO₂ présente une teneur en SiO₂ d'au moins 99,9 pour cent en poids, la teneur en SiO₂ de la masse de liaison se différenciant respectivement de celle des composants en verre de quartz à relier de maximum 3 pour cent en poids, étant au moins partiellement opaque et étant fabriqué à partir de particules SiO₂ amorphes, frittées ou vitrifiées avec une dimension de particule de 500 µm, les dimensions de particules de SiO₂ comprises entre 1 µm et 50 µm représentant la plus grande part volumique de la masse de liaison.

13. Composite selon la revendication 12, **caractérisé en ce que** la densité spécifique de la masse de liaison contenant du SiO₂ s'élève au moins à 2,0 g/cm³, de préférence au moins 2,1 g/cm³.

14. Composite selon l'une des revendications 12 ou 13, **caractérisé en ce que** la masse de liaison contenant du SiO₂ contient des substances de dopage sous forme de Al₂O₃, TiO₂, Y₂O₃, AIN, Si₃N₄, ZrO₂, BN, HfO₂, Si, Yb₂O₃ et/ou SiC, de préférence en tant que particulier sous forme amorphe.

15. Procédé selon l'une des revendications 15 à 19, **caractérisé en ce que** l'un des composants contient une ou plusieurs substances de dopage Al₂O₃, TiO₂, Y₂O₃, AIN, Si₃N₄, ZrO₂, B₂O₃, HfO₂, ou Yb₂O₃.

16. Composite selon l'une des revendications 12 à 15, **caractérisé en ce qu'**une masse de liaison opaque contenant du SiO₂ est générée dans la fente entre deux tubes de verre de quartz disposés coaxialement entre eux.

17. Utilisation d'une masse liquide, pâteuse ou pulvérulente, qui présente des particules amorphes de SiO₂ de 500 µm maximum, les particules amorphes de SiO₂ avec une taille de particule comprise entre 1 µm et 50 µm représentant la part volumique la plus importante, en tant qu'agent de liaison avec une teneur en SiO₂ d'au moins 99,9 pour cent en poids pour la liaison de composants en verre de quartz par pour la liaison de composants en matériau en verre de quartz pour la liaison de matière conformément à un procédé de matière selon l'une des revendications 1 à 11.

18. Utilisation selon la revendication 17, **caractérisée en ce que** les particules de SiO₂ amorphe présentent des tailles de particules maximales de 100 µm.
